# FASCICULE DE BREVET EUROPEEN

(11) **EP 0 579 554 B1**
(45) Date de publication et mention de la délivrance du brevet: **20.12.1995**
(21) Numéro de dépôt: 93401832.6
(22) Date de dépôt: 15.07.1993
(51) Int. Cl.: F16D 13/64

(54) **Disque porte-garnitures, notamment pour véhicule automobile**
Reibebeläge tragende Scheibe, insbesondere für Kraftfahrzeuge
Friction lining carrying disc, especially for automotive vehicle

(30) Priorité: 15.07.1992 FR 9208710; 19.03.1993 FR 9303193; 21.06.1993 FR 9307475
(43) Date de publication de la demande: 19.01.1994
(73) Titulaire: VALEO, 75848 Paris Cédex 17 (FR)
(72) Inventeur: Thirion de Briel, Jacques, F-92700 Colombes (FR); Dalbiez, André, F-95100 Argenteuil (FR)
(74) Mandataire: Gamonal, Didier

(56) Documents cités:
- EP-A- 0 285 300
- FR-A- 768 143
- FR-A- 1 387 565
- FR-A- 2 565 305
- GB-A- 459 006
- GB-A- 461 594
- GB-A- 1 465 913
- US-A- 2 078 276
- US-A- 2 195 666
- US-A- 2 587 837
- US-A- 2 725 966
- US-A- 3 241 644

## Description

La présente invention concerne un disque porte-garnitures pour support de garnitures de frottement propre à la constitution d'un disque de friction, notamment pour véhicule automobile, du genre comportant une partie centrale et une partie périphérique fractionnées en pales radiales propres à recevoir les garnitures de frottement, chacune desdites pales se raccordant à ladite partie centrale par un pied et comportant au moins une zone de portée globalement parallèle au plan moyen de ladite partie centrale, pour contact avec l'une au moins desdites garnitures de frottement et fixation de celle-ci. Dans un disque de friction, lesdites garnitures de frottement s'étendent de part et d'autre de ladite partie périphérique.

Ainsi qu'on le sait, un disque de friction et les divers organes qui lui sont solidaires, sont parfois sujets, en fonctionnement, à des vibrations désagréables constituant ce qu'il est usuel de désigner par broutement. Ce broutement peut se produire aussi bien à faible couple, lors d'une manoeuvre de parking, qu'à couple élevé lors d'un changement de vitesses sur route, ou que lors d'un démarrage en pente.

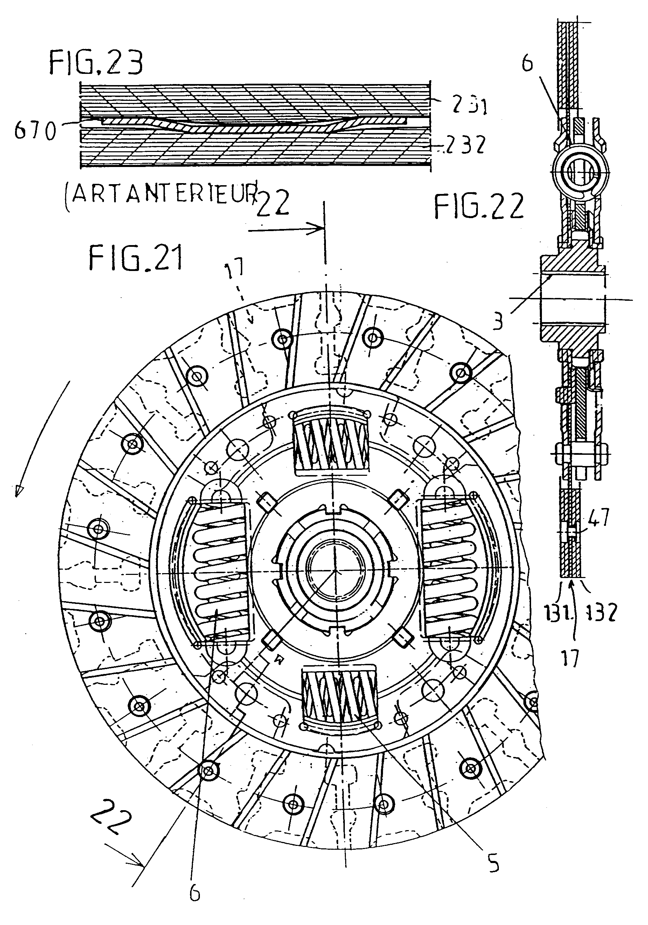

Las zones de portée ont parfois une étendue pas aussi grande que souhaitée, ce qui entraîne un phénomène d'affaissement, couramment appelé incrustation, les garnitures de frottement 231,232 (figure 23) s'affaissant à l'intérieur des creux existant entre deux portées d'appui d'une même pale 670.

Il en résulte un manque de flexibilité qui à charge maximale est responsable au moins pour partie du broutement. Ce manque de flexibilité peut se produire très rapidement.

Pour pallier cet inconvénient, on a proposé dans le document FR-A-2 094 693 d'accroître au mieux le nombre de portées d'appui de chacune des pales ainsi que le nombre de pales.

Comme visible dans les figures de ce document, les pales ont une forme dissymétrique et présentent des découpes. Il en résulte que ces pales ont une tenue à la force centrifuge pas aussi grande que souhaitée.

En outre il se pose un problème de contact avec notamment le plateau de pression de l'embrayage.

En effet dans un embrayage, à chaque engagement de l'embrayage, les garnitures de frottement se trouvent progressivement serrées entre un plateau de pression et un plateau de réaction.

L'échauffement induit par le frottement conduit inévitablement à une mise en cône du plateau de pression, comme explicité par exemple dans le document US-A-2,902,130, et il en est de même, bien que dans une moindre mesure, pour le plateau de réaction.

Il en résulte que la zone suivant laquelle les garnitures de frottement sont soumises à la pression de l'un et de l'autre de ces plateaux se décale progressivement vers l'axe de l'ensemble, avec, pour conséquence, une usure inégale de ces garnitures de frottement et une réduction de leur efficacité (couple transmis moindre), voire même leur broutement.

D'une manière générale, notamment pour des problèmes de standardisation, il est souhaitable que ledit disque puisse convenir à des garnitures du type organique, mais également à d'autres types de garnitures.

La présente invention a pour objet de pallier, de manière simple et économique, ces inconvénients et donc de créer un nouveau disque porte-garnitures standard pouvant tourner à une plus grande vitesse, tout en favorisant la diminution des phénomènes d'incrustation, de broutement et en ayant une possibilité de mise en cône.

Suivant l'invention, un disque porte-garnitures du type sus-indiqué est caractérisé en ce que, pour formation de pales du type tripode, certaines au moins desdites pales présentent une zone centrale de portée, pour contact avec l'une des deux garnitures de frottement et fixation de celle ci, et deux zones périphériques de portée de part et d'autre de ladite zone centrale, pour contact avec l'autre garniture de frottement, et en ce que la zone centrale de portée d'une pale est décalée axialement par rapport auxdites zones périphériques de portée et à ladite partie centrale et est raccordée, d'une part, à la partie centrale du disque porte-garnitures par un pli tangentiel perpendiculaire à l'axe de symétrie radial de la pale et, d'autre part, auxdites zones périphériques par des plis obliques par rapport à l'axe de symétrie radial de la pale.

Grâce à l'invention, on peut augmenter les surfaces de portée ainsi que le nombre de pales. La zone centrale de portée a une très grande largeur circonférentielle, en sorte que les pieds des pales ont également une très grande largeur et sont très robustes.

Ainsi on peut avoir des surfaces de contact supérieures à 25% de la surface totale du dos de la garniture lorsque celle-ci est continue, et on diminue La distance entre deux zones centrales de portée. Il est formé ainsi des pales du type tripode.

Il en résulte que les phénomènes d'incrustation, surtout lorsque l'on utilise des garnitures de frottement du type organique, comme dans le document FR-A-2 094 693, sont diminués et qu'également la pale peut tourner à des vitesses de rotation plus élevées en étant plus résistante aux phénomènes de la force centrifuge qu'auparavant. Les phénomènes de broutement sont diminués.

Le disque porte-garnitures est en outre d'une grande durée de vie et réduit les usures des garnitures de frottement.

La fabrication des pales est simplifiée car aucune découpe dans la partie centrale de la pale n'est à effectuer.

En outre du fait de la configuration de la pale, celle-ci peut suivre les mouvements de mise en cône du plateau de pression et les pressions sont bien réparties.

Les zones périphériques encadrent la zone centrale et les plis tangentiels appartiennent au pied des pales. Les zones centrales se rétrécissent en direction de leur périphérie externe et ont une surface supérieure à celle des zones périphériques de portée.

Grâce aux plis permettant des décalages axiaux, on obtient une bonne stabilité des pales et un bon parallélisme des garnitures de frottement par rapport, par exemple, au plateau de pression.

Grâce à cette disposition, on obtient une bonne progressivité axiale lors de l'engagement de l'embrayage.

En outre en jouant sur la largeur et la longueur des plis, on peut faire varier la flexibilité de la pale.

On appréciera que circonférentiellement les plis tangentiels ont une grande largeur, ce qui rend la pale très robuste.

Par exemple ces pales peuvent être réparties en deux groupes alternés et il est possible d'avoir une flexibilité différente d'un groupe de pales à l'autre en jouant par exemple sur la longueur des plis tangentiels.

Ainsi les pales destinées, par l'intermédiaire de la ou des garnitures de frottement à venir en contact avec le plateau de pression peuvent avoir des plis tangentiels de longueur supérieure à ceux des pales destinées à venir en contact de frottement avec le plateau de réaction par l'intermédiaire de la ou des garnitures de frottement.

Ceci est dû au fait que le mouvement de mise en cône du plateau pression est plus ample que le mouvement de mise en cône du plateau de réaction.

Grâce aux plis obliques, s'étendant à la périphérie externe des pales, ces plis étant dénommés par commodité plis périphériques, on peut obtenir la progressivité axiale voulue. En effet en augmentant la longueur (distance entre les zones de portée) de ces plis on augmente la souplesse des zones périphériques de portée.

Dans une variante de réalisation, une série des pales, associées au plateau de réaction, peut consister en des languettes radiales dans le plan de la partie centrale de la pale.

Grâce à cette disposition, il est possible d'augmenter la longueur circonférentielle des pales tripodes et donc d'augmenter les zones de portée pour arriver à des surfaces de contact supérieures de 33° de la surface totale du dos de la garniture continue.

Il est possible également d'augmenter les zones de portée périphériques en diminuant la hauteur de ces languettes.

Ainsi l'invention à une grande étendue d'application et permet un bon réglage de la raideur des pales. Elle permet d'utiliser des garnitures de frottement du type organique mais également des garnitures de frottement à plots.

Dans les réalisations dans lesquelles les pales tripodes alternent circonférentiellement avec des languettes de manière précitée, lorsque l'on sert progressivement élastiquement les garnitures de frottement entre les plateaux de pression et de réaction, la garniture de frottement, éventuellement fractionnée, associée au plateau de pression est bien soutenue puisqu'elle trouve une réaction sur l'autre garniture de frottement par l'intermédiaire de ses zones périphériques de portée.

Il n'en est pas de même de l'autre garniture de frottement, éventuellement fractionnée, portée par les languettes. Il en résulte que les zones de la garniture en regard des languettes s'usent moins d'où une usure de la garniture qui n'est pas bien répartie.

Suivant une caractéristique, un disque porte-garnitures du type sus-indiqué est caractérisé en ce que certaines au moins desdites languettes présentent, à leur extrémité libre à la faveur d'un pli de raccordement, une zone de portée décalée axialement en direction de la zone centrale des pales tripodes.

Grâce à cette disposition, lors de l'écrasement élastique des garnitures de frottement, la garniture de frottement associée aux languettes trouve une réaction du fait de la nouvelle zone de portée, qui est propre à venir en appui contre l'autre garniture de frottement.

Les phénomènes d'incrustation sont ainsi réduits, l'usure de la garniture des languettes étant mieux répartie.

En outre les phénomènes d'usure de la garniture, associée aux pales, sont réduits puisque la zone de portée des languettes crée un appui supplémentaire. Pour l'autre garniture les usures sont plus régulières.

Suivant une autre caractéristique, les languettes ont une extrémité libre rétrécie circonférentiellement. Ceci permet de donner une bonne souplesse aux zones de portée des languettes, tout en ayant la possibilité d'élargir circonférentiellement les zones périphériques de portée des pales tripodes.

Suivant une autre caractéristique, les languettes ont une forme effilée en direction de leur périphérie externe, en sorte que la zone d'enracinement avec la partie centrale du disque porte-garnitures est augmentée, ce qui accroît la robustesse dudit disque. Ceci permet également de diminuer la raideur de la zone de portée de la languette.

Pour les disques de friction de grande taille (grand diamètre) ou lorsque les garnitures de frottement sont minces en étant collées sur des clinquants rapportés par rivetage sur le disque porte-garnitures, la technologie à au moins une série de pales tripodes n'est pas adaptée. En effet, il faut alors prévoir au moins deux rangées de rivets implantés sur des circonférences de diamètre différent.

Un problème d'implantation des trous de passage des organes de fixation se pose alors au niveau de la zone centrale des pales tripodes, car il faut éloigner les trous de passage des rivets d'une distance radiale notable pour une bonne fixation des garnitures de frottement.

La zone centrale d'une pale tripode se raccordant à la partie centrale du disque porte-garnitures par un pied comportant au moins une zone inclinée, sous forme d'un pli longitudinal ou tangentiel, perpendiculaire à l'axe de symétrie radial de la pale tripode, suivant une caractéristique, la zone centrale d'au moins certaines pales tripodes est prolongée radialement vers l'intérieur à la faveur d'une découpe affectant ledit pli longitudinal, et ledit prolongement est doté d'un trou supplémentaire pour passage d'un organe de fixation de la garniture de frottement.

Grâce à cette disposition, on peut implanter dans le même plan au moins deux trous de passage, espacés radialement l'un de l'autre, dans la zone centrale d'une pale tripode.

Ainsi on peut fixer la garniture de frottement (éventuellement fractionnée) concernée aux zones centrales de la première série de pales tripodes à l'aide d'au moins deux séries de rivets, ou d'autres organes de fixation espacés radialement l'un de l'autre.

Une bonne fixation de la garniture de frottement est ainsi réalisée. Cette garniture peut donc tourner à des vitesses de rotation très élevées.

On appréciera que cette réalisation est économique car elle ne nécessite pas une profonde modification de l'outillage de fabrication du disque porte-garnitures.

En effet, il suffit d'effectuer la découpe à l'aide d'un outil simple et de prévoir deux rangées de trous de passage. De plus le prolongement selon l'invention augmente la zone de portée de la garniture concernée sans nuire à la résistance mécanique du pli longitudinal.

Suivant une autre caractéristique, afin de conserver le maximum d'appui pour la garniture de frottement concernée avec des distances entre appui les plus faibles possible, on multiplie le nombre de pales.

Il en résulte que ces pales ont une largeur circonférentielle moindre et que l'on peut alors conformer les languettes précitées, qui sont globalement dans le plan de la partie centrale, en pales tripodes avec une zone centrale dans le plan de la partie centrale et deux zones périphériques de portée de part et d'autre de ladite zone centrale.

Ainsi, lors de l'écrasement élastique des garnitures de frottement, la garniture de frottement associée aux languettes trouve une réaction du fait de nouvelles zones de portées périphériques, qui sont propres à venir en appui contre l'autre garniture de frottement.

Les phénomènes d'incrustation sont ainsi réduits, l'usure de la garniture de frottement, associée aux languettes, étant mieux répartie. En outre, les phénomènes d'usure de la garniture de frottement, associée à la première série de pales, sont réduits puisque les zones de portées périphériques des languettes créent un appui supplémentaire. Pour l'autre garniture de frottement les usures sont plus régulières.

Bien entendu, on peut remplacer les languettes précitées par une deuxième série de pales tripodes.

Suivant une caractéristique, la découpe affecte localement la zone centrale de la pale tripode afin de réduire les amorces de rupture au niveau du prolongement.

D'autres avantages apparaîtront à la lecture de la description qui va suivre, en référence aux dessins annexés dans lesquels :
- la figure 1 est une vue en élévation d'un disque de friction équipé d'un disque porte-garnitures selon l'invention ;
- la figure 2 est une vue en coupe selon la ligne 2-2 de la figure 1 ;
- la figure 3 est une demi-vue à plus grande échelle de la partie basse de la figure 2 ;
- la figure 4 est une vue schématique des moyens d'engrènement à jeu intervenant entre le moyeu et le voile de moyeu du disque de friction ;
- la figure 5 est une vue en élévation partielle du disque porte-garnitures de cette réalisation ;
- la figure 6 est une vue à plus grande échelle de l'encart 6 de la figure 5 ;
- les figures 7 et 8 sont des vues en coupe respectivement selon les lignes 7,7 et 8-8 de la figure 6 ;
- la figure 9 est une vue en élévation d'une garniture de frottement ;
- la figure 10 est une vue en coupe selon la ligne 14-14 de la figure 13 ;
- la figure 11 est une demi-vue d'une couronne de support pour une autre variante de réalisation ;
- la figure 12 est une demi-vue d'une garniture de frottement équipée de la couronne selon la figure 11 ;
- la figure 13 est une vue en coupe selon la ligne 13-13 de la figure 12 ;
- la figure 14 est une vue analogue à la figure 6 pour une autre variante de réalisation ;
- les figures 15,16 sont des vues partielles en élévation du disque porte-garnitures pour encore d'autres variantes ;
- la figure 17 est une vue partielle à plus grande échelle du disque de la figure 16 ;
- la figure 18 est une vue en coupe selon la ligne 18-18 de la figure 17 ;
- les figures 19 et 20 sont des vues du disque porte-garnitures pour encore d'autres variantes de réalisation ;
- les figures 21 et 22 sont des vues analogues aux figures 1 et 2 pour des garnitures de frottement continues ;
- la figure 23 est une vue en coupe transversale développée d'une pale de l'art antérieur, munie de garnitures de friction, sous charge maximale ;
- la figure 24 est une vue en coupe axiale d'un disque de friction, analogue à celui de la figure 22, équipé d'un disque porte-garnitures pour encore un autre exemple de réalisation ;
- la figure 25 est une vue partielle en élévation du disque de la figure 24 avec hachurage des zones de portées ;
- la figure 26 est une vue en coupe agrandie selon la ligne 26-26 de la figure 25 ;
- la figure 27 est une vue en coupe agrandie selon la ligne 27-27 de la figure 2 ;
- la figure 28 est une vue en coupe axiale partielle d'un disque de friction équipé d'un disque porte-garnitures pour encore une autre réalisation ;
- la figure 29 est une vue partielle en élévation du disque de la figure 28 avec hachurage des zones de portée ;
- les figures 30 à 33 sont des vues analogues à la figure 29 pour d'autres exemples de réalisation ;
- la figure 34 est une vue analogue à la figure 1 pour encore un autre exemple de réalisation ;
- la figure 35 est une vue partielle en coupe selon la ligne 35-35 de la figure 34 ;
- la figure 36 est une vue en coupe montrant l'ailette double pour cette variante de réalisation ;
- les figures 37 et 38 sont des demi-vues pour respectivement chacune des garnitures de frottement.

Dans les figures est illustré un disque porte-garnitures équipé ici de deux garnitures de frottement annulaires, ce disque étant propre à la constitution d'un disque de friction pour embrayage de véhicule automobile.

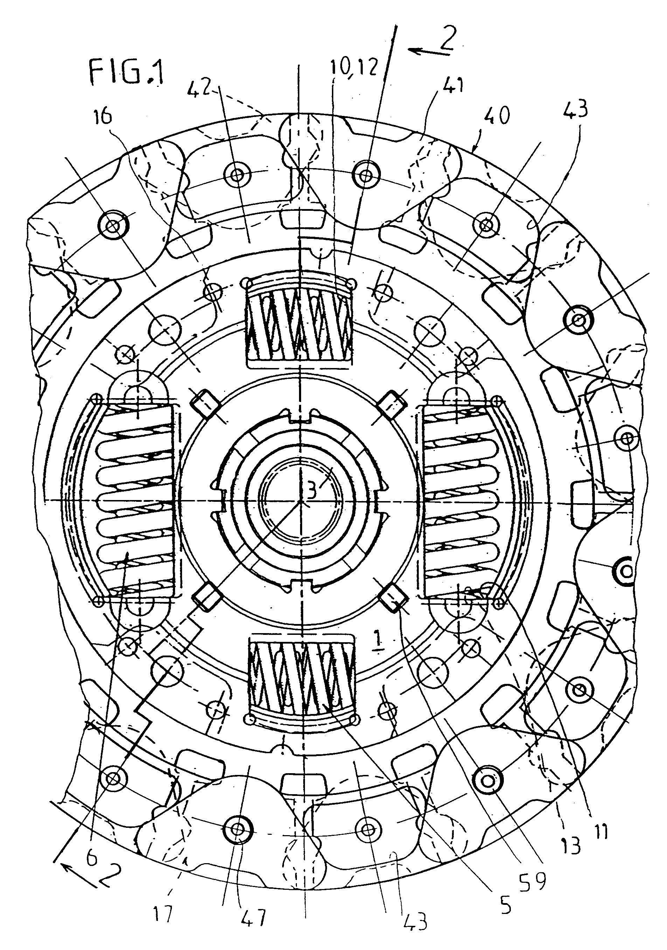

Ce disque de friction comporte deux parties coaxiales montées mobiles l'une par rapport à l'autre à l'encontre d'organes élastiques à action circonférentielle 5,6 et de moyens de frottement 20 à action axiale (figures 1,22,24,34).

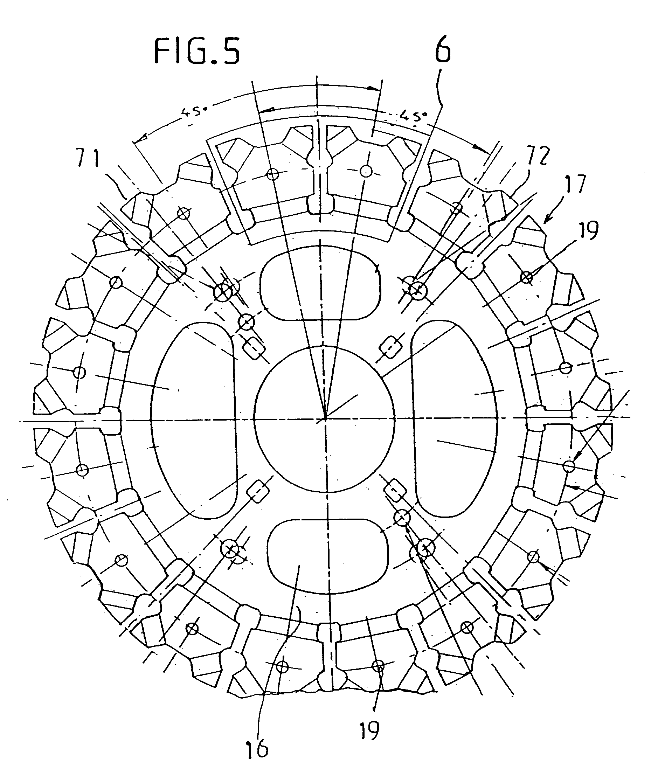

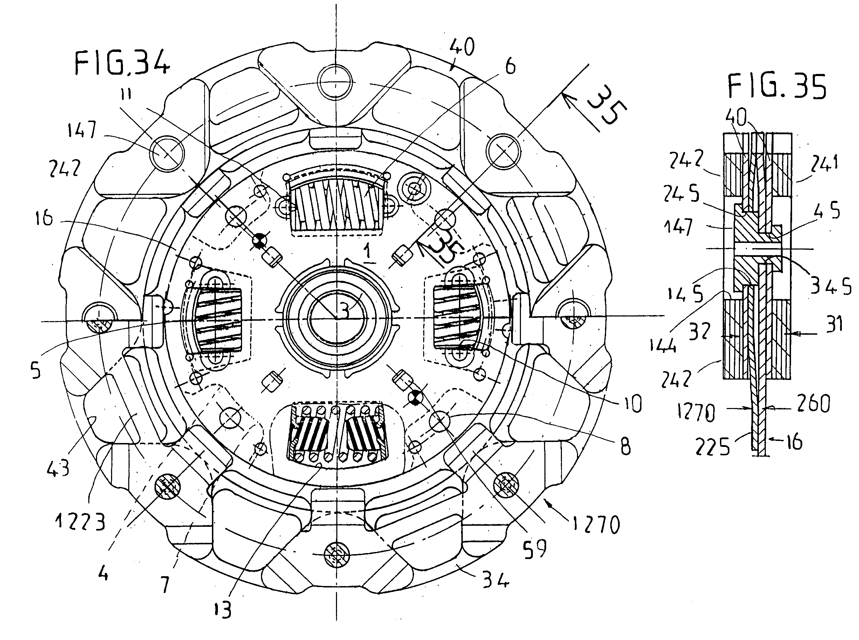

Pour mémoire on rappellera que l'une des parties comporte deux rondelles de guidage 1,2, ici identiques, et un disque porte-garnitures décrit ci-après, tandis que l'autre partie coaxiale comporte un voile 4 solidaire en rotation d'un moyeu 3 (figure 34), par sertissage (non représenté), ou par intervention de moyens d'engrènement à jeu 60 dans la figure 4.

Ces moyens d'engrènement 60 comportent des dentures de forme trapézoïdale formées à la périphérie externe du moyeu 3 et des dentures de forme trapézoïdale formées à la périphérie interne du voile de moyeu 4, lesdites dentures engrenant à jeu. Des ressorts de faible raideur 9 s'appuyent à chacune de leurs extrémités sur des coupelles 90 montées dans des échancrures du moyeu 3 et du voile 4 pour accouplement élastique entre lesdites pièces.

Bien entendu, on peut inverser les structures, le disque porte-garnitures étant solidaire du voile 4 mobile par rapport au moyeu 3, tandis que les rondelles de guidage 1,2 sont alors solidaires du moyeu 3.

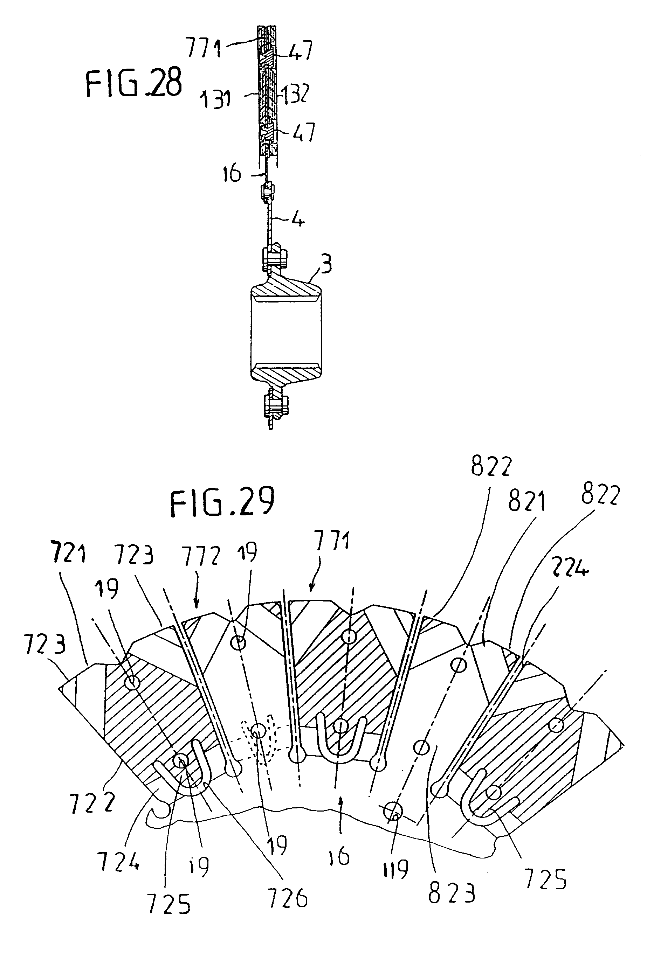

De même le disque porte-garnitures peut être solidaire du voile 4 lui-même solidaire du moyeu 3, le disque de friction étant alors du type rigide comme visible à la figure 28.

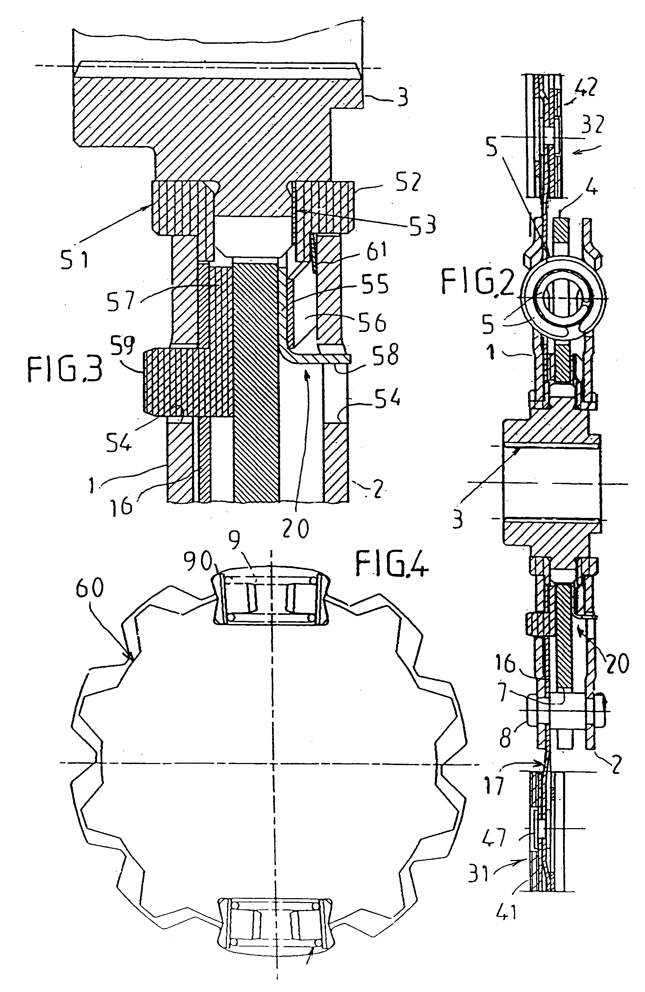

Dans ces figures le disque porte-garnitures est accolé à la rondelle de guidage 1 et solidarisé à celle-ci à l'aide de rivets spécifiques (non visibles) ou de colonnettes 8 (figures 2,22,24,34).

Ainsi qu'on le sait, ces colonnettes 8 traversent à jeu des ouvertures 7 pratiquées dans le voile 4 et solidarisent entre elles les rondelles 1,2 disposées axialement de part et d'autre du voile 4.

Les ressorts 5,6 sont du type ressort à boudin montés par paire à la figure 1 et seul à la figure 34, en variante des blocs en élastomère, peuvent remplacer l'un au moins des ressorts à boudin.

D'une manière générale les ressorts 5,6 sont montés sans jeu dans des fenêtres 10,11 de longueur différente pratiquées dans les rondelles de guidage 1,2. Les ressorts 5 sont montés sans jeu dans des fenêtres 12 du voile 4, tandis que les ressorts 6 sont montés à jeu dans des fenêtres 13 du voile 4, lesdites fenêtres 12,13 étant disposées en vis-à-vis des fenêtres 10,11.

Les moyens de frottement 20 comportent, d'une part, une première rondelle de frottement 57 disposée entre le voile 4 et le disque porte-garnitures adjacent à la rondelle 1 et, d'autre part, entre le voile 4 et la rondelle 2, un ressort à action axiale 56, ici une rondelle ondulée ou en variante une rondelle Belleville, et une rondelle d'application 55, ledit ressort 56 s'appuyant sur la rondelle 2 et sollicitant la rondelle 55 au contact du voile 4 pour serrage de la rondelle 57. Cette rondelle 57 peut être centrée par les colonnettes 9 ou comporter à sa périphérie externe des tétons 59 pénétrant dans des ouvertures 54 de la rondelle 1 (figure 3).

La rondelle d'application 55 peut être liée en rotation à la rondelle 2 grâce à des pattes axiales 58, qu'elle présente, les pattes 58 pénétrant dans les ouvertures 54. En variante la rondelle 55 peut présenter des pattes radiales échancrées engrenant avec les colonnettes.

A la figure 3, des paliers anti-friction en forme de L 51,52 sont interposés entre le moyeu et les rondelles 1,2, une rondelle d'interposition 53 et une rondelle élastique 61 étant également prévues.

Ce disque porte-garnitures comporte, de manière connue en soi, une partie centrale annulaire plate 16. Cette partie centrale présente diverses échancrures et passages pour ici respectivement logement des ressorts 5,6, passage des pattes 58 des tétons 59 et des colonnettes 9.

Pour plus de précisions, on se reportera par exemple à la figure 5.

Le disque présente également avec ladite partie centrale une partie périphérique fragmentée en pales, ici globalement d'orientation radiale. Ces pales seront décrites ci-après.

Dans les figures 1 à 20 et 35 à 38, le disque porte-garnitures est équipé de deux garnitures de frottement annulaires 31,32, montées dos à dos.

Dans un embrayage ces garnitures sont normalement serrées entre les plateaux de pression et de réaction (non visibles) de l'embrayage solidaires en rotation du vilebrequin du moteur à combustion interne du véhicule.

Ainsi le couple est transmis desdits plateaux au moyeu 3 à alésage interne cannelé pour liaison en rotation avec l'arbre d'entrée de la boîte de vitesses.

Lors de la manoeuvre de l'embrayage, durant une première phase, les ressorts 5 sont comprimés, puis les ressorts 6 interviennent en différé, les moyens de frottement 20 intervenant ici constamment avec frottement du voile 4 au contact des rondelles 57,55.

Bien entendu un seul étage de ressorts peut être prévu.

En position embrayage désengagé, les garnitures 31,32 ne sont pas en contact avec lesdits plateaux et l'embrayage est désengagé.

Dans les figures 1 à 10, chaque garniture de frottement 31,32 est fragmentée en plots annulaires de frottement 41,42. Ces plots 41,42 peuvent être en matériau fritté ou à base de fibre de carbone, ou en matériau céramique. Ils sont solidaires d'une couronne 40.

Plus précisément, chaque couronne annulaire continue de support 40 comporte dans un même plan des premières plages 33, pour la fixation des plots de frottement 41,42, et des secondes plages 34 alternant circonférentiellement avec les plages 33, une plage 34 reliant entre elle deux plages 33 consécutives. Les plages 34 sont ajourées centralement par une ouverture d'allégement 43 s'étendant circonférentiellement.

Ainsi on obtient des garnitures 31,32 de grande souplesse et de faible inertie.

Bien entendu on pourrait prévoir plusieurs ouvertures 43 dans chaque plage 34 pour ajourer celles-ci, mais une unique fente d'allégement 43 est préférable pour la réduction des inerties et l'élasticité de la couronne 40. Les plages 33 présentent chacune une languette 46 s'étendant radialement en saillie par rapport à la périphérie externe des plages 34.

C'est sur les plages 33 que sont solidarisés les plots 41,42, ici au nombre de huit par couronne 40.

Chaque plot 41,42 et chaque plage 33 est ici troué centralement. Ainsi chaque plage 33 présente un trou de passage 45 et chaque plot 41,42 un trou 44 de logement de taille supérieure à celle du trou 45. Ces trous 44,45, ici alignés, permettent respectivement le logement de la tête et le passage du fût d'un organe de fixation 47 consistant ici en un rivet.

Ces rivets traversent également des trous 19 appartenant à la pale 17, les trous 19,44,45 alignés sont en regard de l'ouverture 43 ce qui facilite le montage des garnitures de frottement par rivetage.

Les trous 19 sont donc accessibles à la faveur des ouvertures 43.

Ainsi qu'on l'aura compris, le montage des garnitures 31,32 se fait aisément à l'aide des rivets 47.

Grâce à ces dispositions, la couronne annulaire de support n'est pas rigide, ce qui permet à celle-ci de bien suivre les déformations du plateau de pression sous l'effet de la chaleur engendrées par le frottement avec lesdits plots.

Les ajourages des couronnes permettent une réduction de l'inertie, tout en facilitant la fixation des plots de l'autre garniture de frottement et en favorisant la ventilation.

D'une manière générale les couronnes de support permettent de diminuer le nombre de pièces et de rigidifier les pales du disque porte-garnitures, qui peut donc tourner à une très grande vitesse sans que ces pales risquent de se fracturer. Leur souplesse facilite le montage des garnitures sur le disque.

Ces couronnes 40 sont plus épaisses que les pales 71,72 et la partie centrale 16 pour une bonne tenue du disque porte-garnitures à la force centrifuge, tout en ayant une inertie acceptable.

La réduction de l'épaisseur des pales, rendue possible par les couronnes 40, permet de réduire les phénomènes d'incrustation et d'inertie.

Le disque porte-garnitures est ménagé, les couronnes 40 reliant entre elles deux pales.

Bien entendu, de manière connue en soi, les plots 41,42 sont fixés par collage ou brasage sur les plages 33 et se marient bien avec les pales 17 élastiques axialement du type tripode selon l'invention et décrite ci-après.

Chaque couronne 40, plus épaisse que la partie centrale 16, comporte des secondes plages 34 ajourées par une ouverture 43 fermée, de forme trapézoïdale avec la grande base proche de la périphérie interne de la couronne 40. Les coins de l'ouverture 43 sont arrondis. Cette ouverture 43 se rétrécit vers l'extérieur, la couronne de support 40 étant continue à sa périphérie interne.

Cette ouverture 43 permet un accès aux trous 44,45,19.

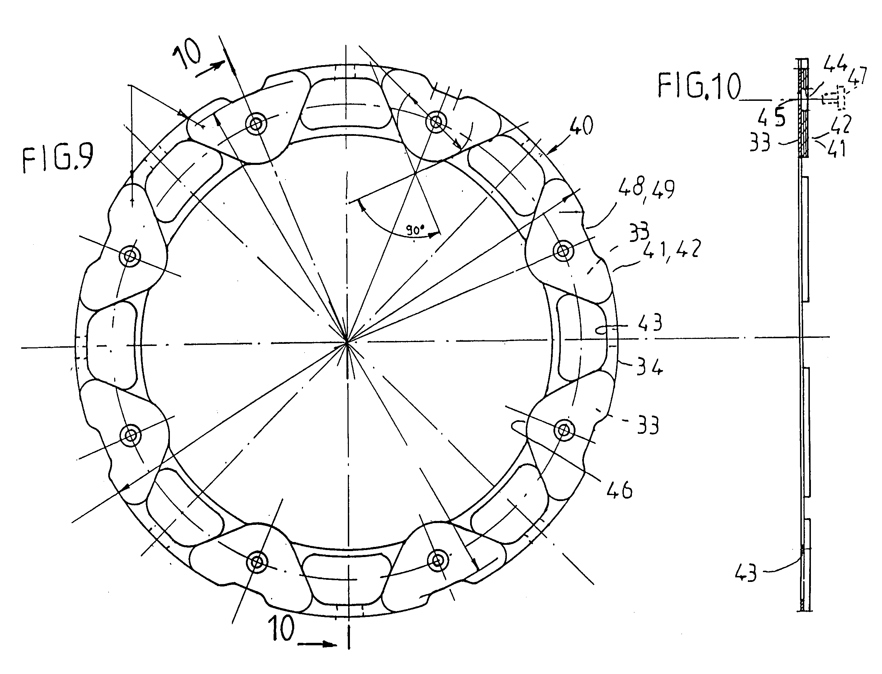

Ici les plages 34 s'étendent sur la même circonférence externe que les premières plages 33 et les plots 41,42 (voir par exemple figure 9).

Les plots 41,42 ont une forme triangulaire avec une pointe arrondie dirigée radialement vers l'intérieur de la couronne 40 pour réduire encore les phénomènes de broutement par attaque en biais.

Pour ce faire, chaque première plage présente, à sa périphérie interne, des protubérances 46, de forme annulaire, dirigées vers l'intérieur, pour support de la pointe arrondie du plot associé 41,42.

Corollairement à sa périphérie externe, chaque plage 33 présente un évidement 48 avec un fond plat et deux flancs latéraux inclinés.

Chaque plot 41,42 présente en vis-à-vis de l'échancrure 48 une échancrure 49 de forme complémentaire à fond plat et flancs inclinés. Les évidements 48,49 réduisent les inerties et favorisent la ventilation. Ils permettent un bon soutien des plots et des couronnes grâce aux pales tripodes 17.

Les plots 41,42 ont donc une forme triangulaire avec deux oreilles externes, ici arrondies, et une pointe interne arrondie.

Ainsi qu'on l'aura compris, les fentes trapézoïdales 43 permettent d'augmenter la largeur circonférentielle des premières plages 33, les bords des ouvertures 43 ayant une forme complémentaire aux côtés des plots 41,42.

Ainsi les plots 41,42 ont une longueur circonférentielle à leur périphérie externe supérieure, tandis qu'à leur périphérie interne lesdits plots sont moins larges. Les plots 41,42 se recouvrent ainsi partiellement à leur périphérie externe (figure 1). Un meilleur parallélisme des garnitures est ainsi obtenu.

Grâce à cette disposition et aux fentes 43, les plots 41,42 peuvent bien suivre le mouvement de déformation en cône du plateau de pression ainsi que le mouvement moindre de déformation en cône du plateau de réaction sous l'effet des sollicitations thermiques.

Les phénomènes de broutement sont également minimisés lorsque les garnitures 31,32 viennent au contact desdits plateaux, car il se produit une attaque en biais.

Bien entendu, on obtient une bonne progressivité axiale lors du serrage des garnitures 31,32 entre lesdits plateaux. Cette élasticité axiale étant donnée par la configuration des pales 17.

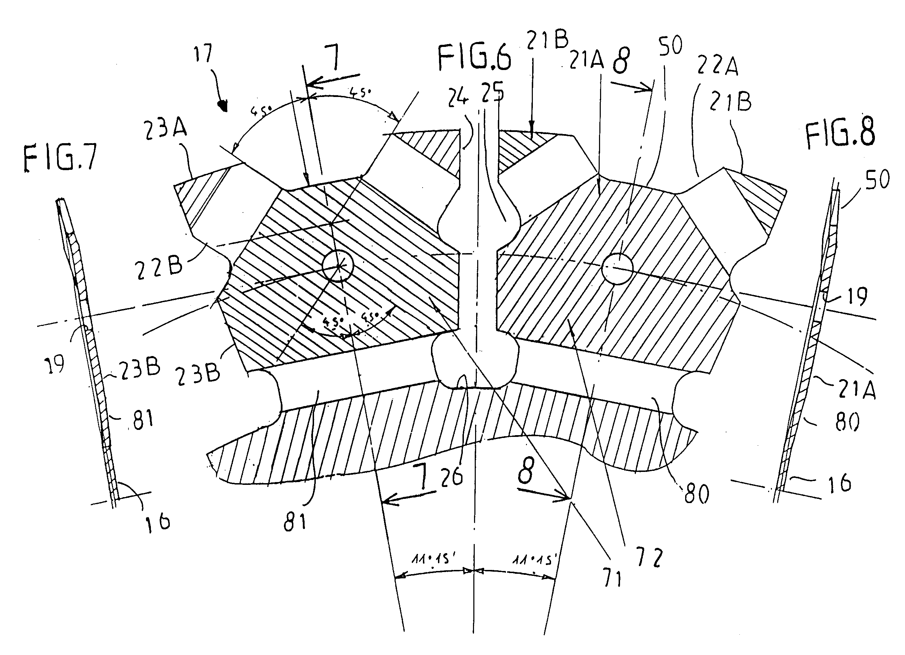

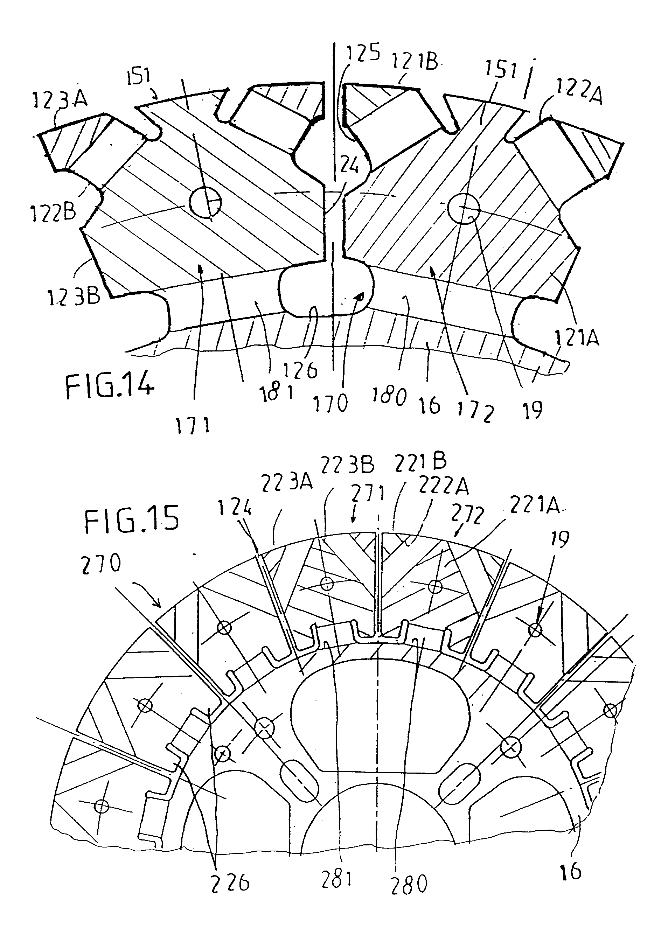

Dans les figures 1 à 10, les pales 17 s'étendent radialement en saillie à la périphérie externe de la partie centrale 16 du disque, en étant d'un seul tenant avec ladite partie centrale, comme dans les figures 14 à 33, décrites ci-après. Ces pales 17 sont ici métalliques, tout comme la partie centrale 16 et sont réparties en deux groupes (ici de huit) alternés 71,72, chaque pale d'un même groupe étant décalée circonférentiellement à 45° par rapport à la pale de l'autre groupe, l'angle entre deux pales consécutives étant de 23° (figure 6). Ces pales radiales ont une forme de tripode avec trois zones planes de portée ou d'appui respectivement 21A,21B-23A,23B.

Ainsi par rapport aux réalisations classiques, on augmente le nombre de pales, ici moins épaisses que les couronnes 40, tout en ayant des pieds de pale de grande largeur circonférentielle et donc robustes.

En considérant par exemple la pale 72, on voit que celle-ci est symétrique et comporte une grande zone plane centrale de portée 21A pour contact avec le support 40 de la couronne concernée et fixation de celle-ci, ladite zone 21A présentant pour ce faire centralement le trou 19 pour le passage des rivets 47 et fixation de la couronne 40.

Cette zone centrale se rétrécit (comme dans toutes les figures) en direction de la périphérie externe du disque porte-garnitures. Elle a globalement une forme triangulaire à sa périphérie externe. Ici cette partie triangulaire a une pointe tronquée. La partie interne de la zone centrale des pales 71,72 est donc plus large circonférentiellement que sa partie interne rétrécie.

La pale 72 présente également deux zones planes de portée 21B coplanaires propres à coopérer avec le support de l'autre garniture de frottement. Ces zones 21B s'étendent à la périphérie externe de la pale et forment des oreilles. Les zones 21B s'étendent de part et d'autre de la zone centrale 21A. Elles ont une forme triangulaire et sont raccordées à la zone 21A par des plis obliques 22A, symétriques par rapport à l'axe radial de symétrie de la pale. Les zones 21B et 21A sont donc décalées axialement en étant parallèles entre elles.

Un congé de raccordement est prévu entre la zone 21A et l'extrémité interne du pli 22A (figure 6).

La zone 21A se raccorde à la partie centrale 16 par un pli, d'orientation tangentielle 80 ou pli longitudinal perpendiculaire, ici à l'axe de symétrie radial de la pale. Ainsi la zone 21A est décalée axialement par rapport à la partie centrale 16.

Des arrondis de raccordement sont prévus aux extrémités circonférentielles des plis 80 pour raccorder ceux-ci à la partie 16 et à la portée 21A. Il y a donc formation d'un col.

A sa périphérie externe, la pale présente à sa périphérie externe centralement une échancrure 50 de forme complémentaire aux échancrures 48,49.

La pale 72 a globalement la forme d'une tête de chat. La pale 71 a une forme symétrique identique à la pale 72 mais sa zone centrale plane 23B est décalée axialement par rapport à la zone centrale 21A, cette zone centrale 23B est dans le plan des zones 21B de la pale 71. De même les deux zones planes 23A de la pale 72 sont décalées axialement par rapport à la zone centrale 23B en étant dans le plan de la zone centrale 21A.

Les zones 23A sont raccordées à la zone 23B par des plis obliques 22B dirigés axialement en sens inverse par rapport aux plis 22A. La zone centrale 23B est raccordée à la partie centrale 16 par un pli tangentiel 81 dirigé axialement en sens inverse du pli 80. Les plis 80,81 constituent donc les pieds des pales et ont ici une même largeur circonférentielle, la distance, entre la partie centrale 16 et la zone centrale de portée, étant dénommée longueur.

Chaque pale, ici métallique, présente donc selon l'invention une zone centrale de portée, pour contact avec l'une des deux garnitures de frottement et fixation de celle ci, et deux zones périphériques externes de portée, pour contact avec l'autre garniture de frottement, lesdites zones centrales étant décalées axialement par rapport aux zones périphériques et ici à ladite partie centrale 16 du disque porte-garnitures, les zones centrales et périphériques s'étendant dans des plans parallèles au plan moyen de la partie centrale. Las zones périphériques supportent en partie les oreilles périphériques des plots 41,42 et c'est la raison pour laquelle elles ont une forme triangulaire en sens inverse (figure 6).

Ces zones périphériques s'étendent de part et d'autre de la zone centrale de portée et, suivant l'invention, la zone centrale de portée est raccordée, d'une part à la partie centrale du disque porte-garnitures par un pli tangentiel, et, d'autre part, auxdites zones périphériques par des plis obliques.

Les plis 22A,22B obliques périphériques ont donc une forme en V interrompue au niveau de la pointe, c'est-à-dire une forme en V tronquée. La fente 24 séparant deux pales 71,72 s'étend radialement avec un épanouissement 26 au pied de la fente, et un deuxième épanouissement 25 au niveau des plis 22A,22B.

Ainsi les couronnes 40 ne sont pas dans le plan de la partie centrale 16 mais sont décalées axialement par rapport à celles-ci.

On appréciera que les pieds de pales constitués ici par les plis 80,81 sont très rapprochés, d'une grande largeur et donc très robustes.

Les pales 71,72 peuvent ainsi tourner à des vitesses de rotation plus élevées du fait de leur symétrie radiale, ce qui supprime les sollicitations de flexion dans les pieds de pales sous l'effet de la force centrifuge.

Les zones périphériques 21B,23A sont destinées à venir en contact avec la périphérie externe des plots 41,42, plus précisément avec les oreilles de celles-ci.

Les pales 71,72 du type tripode sont donc échancrées en 50 centralement à leur périphérie externe tout comme les plots 41,42 et la couronne 40. L'échancrure 50 présente un fond plat et deux flancs inclinés.

On notera (figure 1) que les plots 41,42 sont admis à se recouvrir partiellement à leur périphérie externe.

Ainsi par exemple la zone 23B de la pale 71 porte le plot 41 à fixation, tandis que les zones 23A servent de support aux oreilles périphériques du plot 42.

Grâce à toutes ces dispositions, les couronnes 40 peuvent basculer par rapport à un plan transversal et suivre au mieux la mise en cône des plateaux de pression et de réaction du fait notamment que la périphérie interne des couronnes 40 est à distance de la partie centrale. Une bonne progressivité axiale lors du serrage des garnitures 31,32 est obtenue grâce aux zones 21B,23A et au décalage des zones 21A,21B par rapport à la partie centrale 16.

Ainsi les pales 71,72 sont bi-directionnelles, la moitié de la distance entre les deux garnitures 31,32 est donnée par la pale 72, l'autre moitié par la pale 71. Ceci ménage les pales et notamment les trous 19 et les rivets 47. Les pales 71,72 sont adaptées à la forme des plots 41,42 et sont élastiques axialement.

Bien entendu, il est possible d'ouvrir centralement à leur périphérie externe les fentes trapézoïdales des deuxièmes plages de la couronne (voir pointillés de la figure 9).

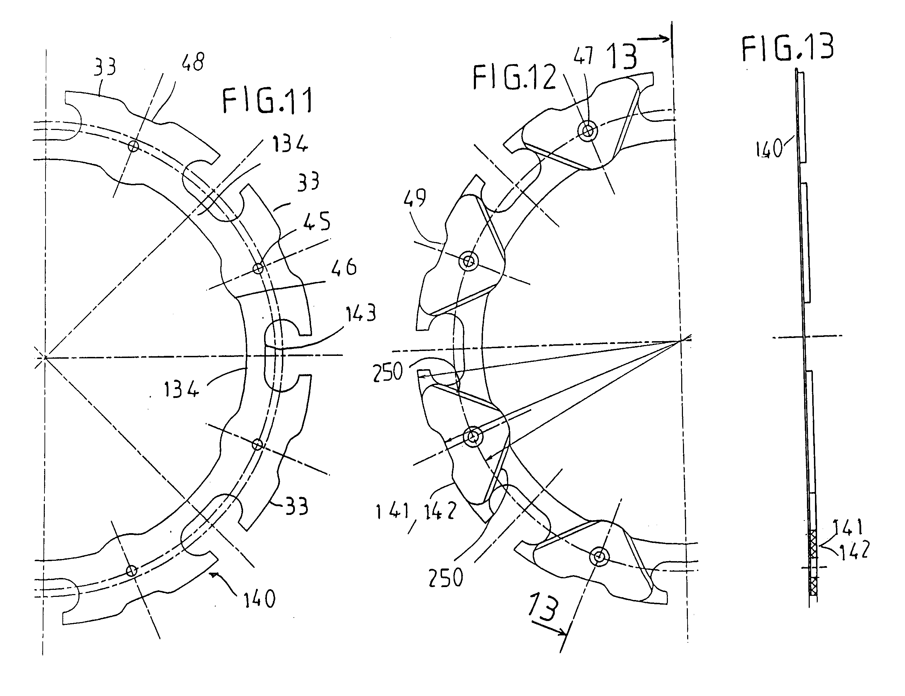

Dans les figures 11 et 12, les premières plages 33 ont une forme identique à celle des figures précédentes, mais l'ouverture 143 pratiquée dans les deuxièmes plages 134 de la couronne 140 de support des plots 141,142 est ouverte, ici centralement, vers l'extérieur.

Ceci est particulièrement favorable car on réduit les contraintes qui se produisent sous l'effet de chaleur. La périphérie interne des zones 134 pouvant se déformer par rapport aux plages 33 sans risque de rupture.

Suivant une autre caractéristique, les flancs inclinés des plots 141,142 sont chanfreinés, ainsi les plots ont une forme triangulaire avec une base échancrée en 49 et deux côtés chanfreinés en 250. Les chanfreins 250 permettent d'atténuer les effets de bilame se produisant entre les plots 41,42 et les couronnes 40. En effet, sous l'effet de la chaleur, les couronnes 140 se dilatent de manière différente par rapport aux plots, notamment lorsque ceux-ci sont en matériaux frittés comportant notamment des particules de cuivre.

Grâce aux chanfreins 250, on ne risque pas d'effriter les plots.

Bien entendu la présente invention n'est pas limitée aux exemples de réalisation décrits. En particulier (figure 14) les pales peuvent être modifiées pour présenter une zone centrale de portée (zones centrales 121A,123B) augmentée par formation d'une languette périphérique externe 151 favorisant la ventilation en faisant saillie par rapport aux échancrures 48,49. La pointe de la partie centrle est donc modifiée.

Les pales 170 du type tripode, fractionnées en deux jeux de pales 171,172, offrent donc une plus grande portée. Les plis tangentiels (ou pieds) 180,181 ont une largeur différente, ce qui permet d'avoir des pales de raideur différente.

On appréciera que cela est rendu possible grâce à l'invention permettant d'obtenir des pieds de pales de largeur supérieure à la normale.

Ainsi la pale 172 a un pli 180 plus large que le pli 181. Il en résulte que cette pale est plus raide. En pratique les pales 171 sont fixées à la garniture de frottement destinée à venir en contact avec le plateau de pression de l'embrayage.

On notera que le décalage axial des zones 121A par rapport à la partie 16 est différent du décalage axial de la zone 123B par rapport à la partie 16. Le décalage axial est moins important pour les pales les plus raides (côté plateau de réaction) d'où une bonne progressivité axiale lors de la manoeuvre de l'embrayage.

Les pales 172 sont associées alors au plateau de réaction et sont plus raides mais cela est sans conséquence car le plateau de réaction subit des déformations de mise en cône moindre.

On peut obtenir le même effet en ayant des plis 180,181 de même largeur mais de longueur différente (distance entre partie 16 et zones 121A ou 123B concernées).

On notera que la fente 24, entre deux pales consécutives, est modifiée. Les épanouissements 125,126 ayant alors une forme dissymétrique.

Les zones de portée périphériques 121B et 123A ont une configuration différente. Les zones 121B ayant globalement une forme triangulaire, tandis que les zones 123A ont une forme de quadrulatère en étant plus allongées circonférentiellement.

Les plis obliques périphériques 122A et 122B ont également une taille différente, les plis 122A étant plus longs (distance entre les zones de portée) que les plis 122B et donc plus souples.

Ainsi en jouant sur la longueur et la largeur des plis obliques périphériques on peut faire varier la raideur des zones de portée périphériques, qui s'étendent de part et d'autre de la zone de portée centrale.

Ainsi à la figure 15, les plis périphériques 222A et 222B sont augmentés en largeur, la fente 124, entre deux pales consécutives 271,272, ayant alors une largeur constante en étant plus étroite.

Les zones de portée 223B et 221A ont une extrémité externe en forme de pointe (ou triangulaire) et présentent à leur périphérie interne deux pattes 226 encadrant les plis tangentiels 280,281 de longueur réduite.

Dans les figures 14 à 18, il est prévu qu'une seule série de pales du type tripode de celle de la figure 14, l'autre série de pales étant remplacée par des pales radiales 371 en forme de languettes radiales dans le plan de la partie centrale 16. Dans ce cas, la pale 371 du disque n'a qu'une zone de portée et l'autre pale est élargie circonférentiellement par rapport aux pales de la figure 14.

Ainsi les pales, selon l'invention, alternent circonférentiellement avec une série de languettes 371.

Sur cette figure, on voit que la pale 372 a globalement une longueur circonférentielle de 30° tandis que la languette 371 a une longueur de 15°.

La longueur circonférentielle, entre les axes des pales 372 et 371, étant comme précédemment de 23°.

On notera que les languettes 371 ont une élasticité suffisante pour suivre le mouvement de mise en cône du plateau de réaction.

La largeur des plis 380 et 322A des pales 372 est également augmentée ainsi que le décalage axial entre la partie 16 et les zones centrales 321A. Les pales 372 sont plus souples.

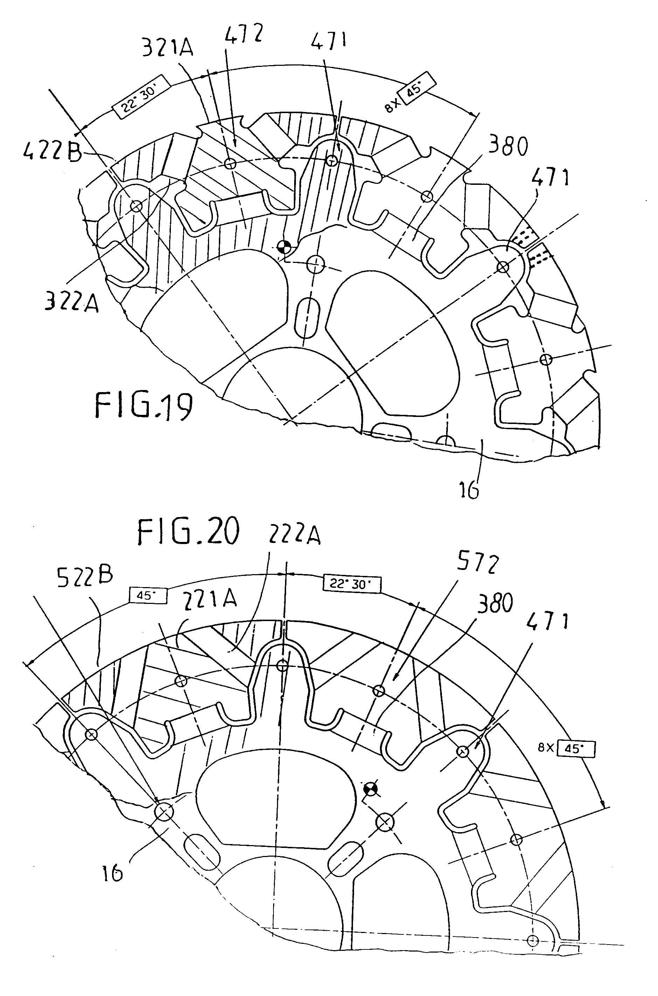

Dans la figure 19, on augmente la surface des portées périphériques 422B. Dans ce cas les languettes radiales 471, dans le plan de la partie centrale 16, ont une extrémité arrondie qui est enveloppée en partie par les zones 422B en forme d'aile d'oiseau.

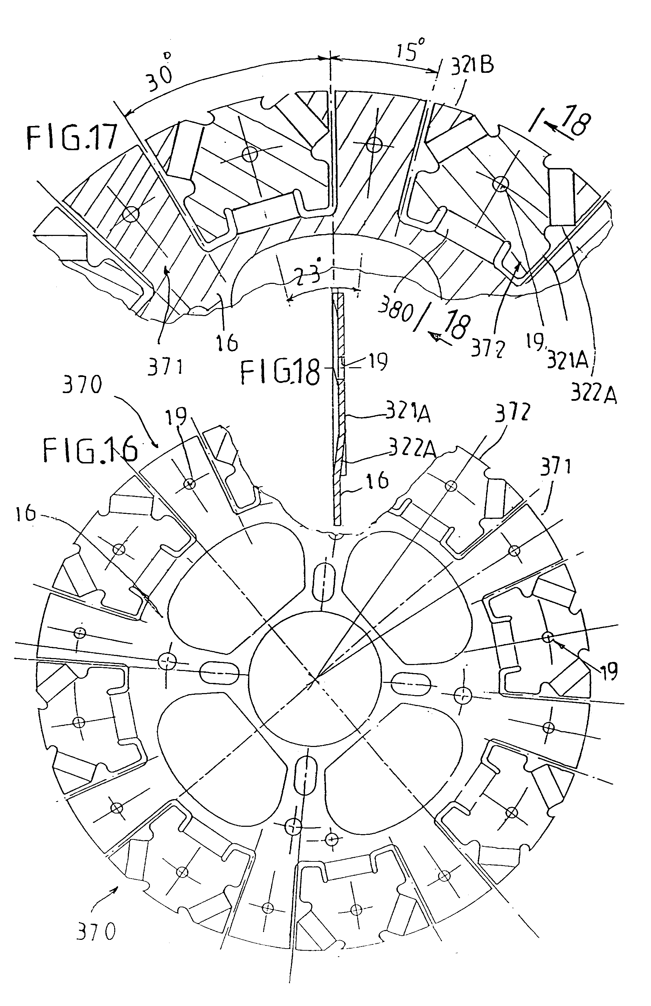

Ainsi au moins une des zones de portée périphériques 422B enveloppe en partie une languette radiale 471. Ici les deux zones 422B de deux pales 472 consécutives enveloppent chacune une pale 471, lesdites pales 471 s'étendant radialement en-dessous desdites zones 422B en étant raccourcies par rapport aux pales de la figure 17.

Deux pales consécutives 472 enveloppent ainsi une pale 471.

Bien entendu, il est possible comme visible à la figure 20 d'augmenter la largeur (distance entre les bords libres) des plis périphériques 222A en donnant à la pale 572 une configuration analogue à celle de la figure 15. Dans ce cas, un léger intervalle existe entre les pales arrondies 471 et les pales 572.

Dans toutes ces figures les garnitures de frottement peuvent aisément basculer.

Les pales (figures 16 à 20) fractionnées en deux jeux, offrent une portée maximale à la garniture 31 associée au plateau de pression.

Bien entendu, il est possible de faire des combinaisons. Ainsi les ouvertures des secondes plages des couronnes de support ne sont pas forcément toutes identiques entre elles, certaines pouvant être fermées et d'autres ouvertes.

De même certaines secondes plages peuvent être dotées d'ouvertures oblongues et d'autres d'ouvertures trapézoïdales.

Une même garniture de frottement 31,32 peut être équipée de plots de frottement de forme rectangulaire et de plots de forme triangulaire.

Les oreilles des plots peuvent avoir des bords circonférentiels plats.

Bien entendu l'invention est d'un emploi universel et (figures 21 et 22, 24 et 28) les garnitures de frottement 131,132 peuvent être du type organique comme dans le document FR-A-2 094 693, c'est-à-dire circonférentiellement continues, par exemple en étant renforcées par des fibres de verre , de KEVELAR ou autres, aucune couronne de support ni plot de frottement n'étant alors prévus.

En variante les garnitures de frottement peuvent consister en une pluralité de segments comportant par exemple deux plots avec entrelacement desdits segments d'une garniture à l'autre.

On peut concevoir également une disposition avec deux disques de support accolés, l'un portant par exemple les pales 172 de la figure 14 et l'autre les pales 171 de ladite figure 14. Dans ce cas l'épaisseur des disques est réduite.

Dans tous les cas, on obtient des zones centrales de grande portée, avec une partie interne plus large circonférentiellement que sa partie externe rétrécie en direction opposée à l'axe de l'ensemble, réduisant les phénomènes d'incrustation ainsi que les phénomènes de broutement car les garnitures de frottement restent dans un plan bien parallèle.

Le disque porte-garnitures peut ainsi tourner à grande vitesse tout en suivant le mouvement de mise en cône du plateau de pression.

Bien entendu les pales peuvent avoir une forme dissymétrique notamment au niveau de leurs zones portée périphériques, l'une pouvant avoir une longueur différente de l'autre.

On appréciera que les plis tangentiels et les plis obliques donnent une bonne stabilité aux pales tripode, ce qui permet d'avoir un bon contact des garnitures avec notamment le plateau de pression, ce qui réduit les usures des garnitures de frottement.

Les plis tangentiels peuvent ne pas constituer à eux seuls le pied des pales, un bout de pied raccordant lesdits plis à la partie centrale du disque.

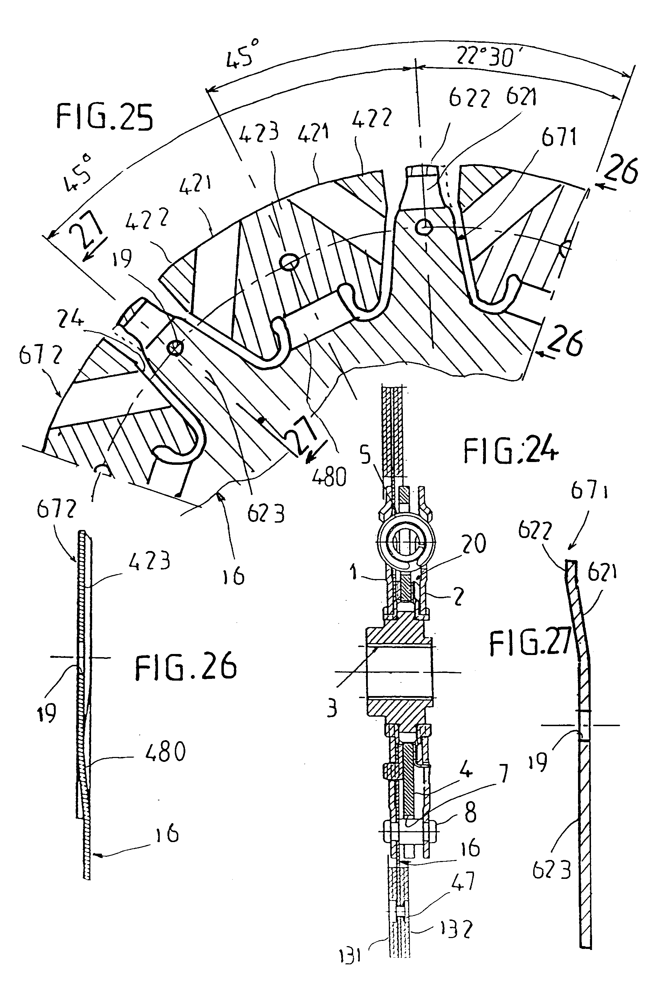

Il est possible de doter les languettes d'au moins une zone de portée supplémentaire comme visible dans les figures 24 à 33.

Ainsi dans les figures 24 à 27 le disque comporte une partie centrale 16 et d'un seul tenant une partie périphérique fractionnée en pales radiales 672 alternant circonférentiellement, ici régulièrement, avec une série de languettes radiales 671 dans le plan de la partie centrale 16 du disque porte-garnitures.

Chaque pale cambrée se raccorde à la partie centrale 16 par un pied 480 et présente une zone centrale de portée 423 et deux zones périphériques de portée 422.

La zone centrale 423 sert à la fixation d'une garniture de frottement 132, tandis que les languettes 671 servent à la fixation d'une autre garniture de frottement 131. A cet effet, les languettes 671 et les zones centrales 423 des pales 672 présentent ici des trous 19, répartis sur une même circonférence, pour fixation desdites garnitures 131,132 au disque porte-garnitures ici par l'intermédiaire de rivets 47 (figure 24).

Plus précisément le disque porte-garnitures avec ses garnitures 131,132 appartient ici à un disque de friction comportant deux parties coaxiales montées mobiles l'une par rapport à l'autre à l'encontre d'organes élastiques à action circonférentielle 5 et de moyens de frottement 20 à action axiale, de manière précitée.

Ici, comme dans les figures 1 à 4, le voile 4 est solidaire en rotation du moyeu 3, avec intervention des moyens d'engrènement à jeu précités.

Les moyens de frottement comportent une rondelle de frottement interposée axialement entre le voile 4 et la rondelle 1, ainsi qu'une rondelle d'application calée en rotation sur la rondelle de guidage 2 à l'aide de pattes axiales engagées dans des ouvertures de ladite rondelle 2.

Un ressort prend appui sur la rondelle 2 et sollicite la rondelle d'application en contact du voile 4.

Le disque porte-garnitures est équipé de deux garnitures de frottement annulaires 131,132 montées dos-à-dos, de part et d'autre de la partie centrale 16 ici métallique.

Dans un embrayage, les garnitures 131,132 sont normalement serrées entre les plateaux de pression et de réaction (non visibles) de l'embrayage solidaires en rotation du vilebrequin du moteur à combustion interne du véhicule automobile, tandis que le moyeu 3, grâce à son alésage interne cannelé, est lié en rotation avec l'arbre d'entrée de la boîte de vitesses.

Lors de la manoeuvre de l'embrayage, pour désengager celui-ci, on desserre les garnitures de frottement 131,132 en sorte qu'en position embrayage désengagé celles-ci ne sont pas en contact avec lesdits plateaux de pression et de réaction.

Lorsque l'on réengage l'embrayage les garnitures 131,132 sont serrées élastiquement progressivement entre lesdits plateaux.

Ce serrage progressif est dû ici en majeure partie aux pales tripodes 672 et plus particulièrement grâce à leurs zones périphériques de portée 422.

Ces pales 672 ont une forme de tripode avec trois zones planes de portée respectivement 422 et 423.

La zone plane centrale 423 est en contact avec la garniture de frottement 132 associée au plateau de pression et sert à la fixation de ladite garniture 132. Cette zone 423, comme dans toutes les figures, se rétrécit en direction de la périphérie externe du disque porte-garnitures.

Les zones 422 s'étendent périphériquement de part et d'autre de la zone centrale 423. Elles ont une forme globalement triangulaire et sont raccordées à la zone 423 par des plis obliques 421, symétriques par rapport à l'axe radial de symétrie de la pale 672.

Les zones 422 et 423 sont décalées axialement en étant parallèles entre elles. Plus précisément les zones 422 sont propres à venir en contact avec la garniture de frottement 131 associée au plateau de réaction de l'embrayage. Ici elles s'étendent dans le plan de la partie centrale 16.

La zone centrale 423 se raccorde à la partie centrale 16 par un pli d'orientation tangentielle 480 ou pli longitudinal perpendiculaire et symétrique ici à l'axe de symétrie radial de la pale. Ce pli 480, oblique axialement, forme le pied de la pale et permet un décalage axial de la zone 423 par rapport à la partie centrale 16.

Ainsi lors de l'écrasement des garnitures 131,132 les zones 422 se déforment axialement. On notera que les plis 480 sont d'une grande largeur et donc très robustes et que la zone 423 présente deux zones internes encadrant le pied 480. Les fentes 24, en forme de canne, séparent les pales 672 des languettes 671. Ces fentes débouchent à la périphérie externe du disque porte-garnitures et ont une extrémité interne fermée en forme de C pour raccordement aux plis 480.

Les pales 672 ont une grande étendue circonférentielle et sont séparées ici les unes des autres par un angle de 45°, un angle de 22°,30' existant ici entre l'axe de symétrie d'une pale 672 et l'axe de symétrie d'une languette 671 et donc entre deux trous 19. Une pale 672 est donc encadrée de manière régulière par deux languettes 671, les trous 19 étant répartis régulièrement circulairement.

Certaines au moins desdites languettes présentent à leur extrémité libre, à la faveur d'un pli de raccordement 621, une zone de portée 622 décalée axialement en direction de la zone centrale 423 des pales tripodes.

Ainsi lors de l'écrasement des garnitures 131,132 ladite zone 622 est propre à venir en contact avec la garniture 132 pour offrir ainsi une réaction. Cette zone 622 constitue donc une zone de stabilisation s'étendant ici dans le plan de la zone centrale 423 grâce au pli oblique 621. En variante la zone 622 peut être légèrement en retrait par rapport à la zone 423. Ainsi la garniture 131 reste bien plane.

Ici la languette 671 a une forme effilée, sa zone d'enracinement avec la partie centrale 16 étant plus large que sa périphérie externe constituée par la zone de portée 622 précitée, dont la périphérie externe est située sur la même circonférence que celle des pales 672.

Ainsi la languette 671 présente d'un seul tenant une partie principale 623 de portée et de fixation de la garniture 131 grâce aux trous 19, un pli radial de raccordement 621 et la zone de portée 622. La hauteur du pli 621 est supérieure à la hauteur de la portée 622. Ces languettes 671 d'orientation radiale sont donc souples et flexibles. Leur effilement permet de donner de la souplesse à la portée 621,622.

On notera que l'extrémité libre 622,621 de la languette 671 est rétrécie circonférentiellement, ce qui permet de donner encore plus de souplesse à la portée 622, qui s'étend circonférentiellement entre deux zones 422 à la périphérie externe du disque.

Ainsi on obtient un disque porte-garnitures avec à sa périphérie externe de grandes zones de portée réduisant les phénomènes d'incrustation et de broutement car les garnitures de frottement 131,32 restent dans un plan bien parallèle. Le disque porte-garnitures et donc le disque de friction peuvent ainsi tourner à grande vitesse tout en suivant le mouvement de mise en cône des plateaux de pression et de réaction. Les usures des garnitures sont encore mieux réparties.

On appréciera que les plis 480 et 621 donnent une bonne stabilité au disque porte-garnitures, ce qui permet d'avoir un bon contact des garnitures de frottement avec les plateaux de pression et de réaction, ce qui réduit les usures des garnitures de frottement.

Ici la zone de portée 622 est de hauteur moindre que celle des portées périphériques 422. La hauteur du pli 621 et de la zone 622 étant globalement égale à celle de la zone oblique 422. En effet on recherche ici un point d'appui supplémentaire et une souplesse.

En variante on peut modifier la raideur de la zone 622 de manière simple en diminuant ou en augmentant la longueur du pli 621, en sorte que la périphérie externe des languettes peut s'étendre sur une circonférence de diamètre inférieur ou supérieur à celle de la circonférence de la périphérie externe des pales 672.

On appréciera que le bon équilibre du disque de friction et la bonne planéité de ses garnitures de frottement notamment dûs à la répartition régulière des trous de fixation 19 et à leur position sur l'axe de symétrie des languettes 671 et des pales 672.

On notera également la simplicité de fabrication grâce au déplacement radial possible de l'outil de découpe permettant la fabrication de disques avec des pales et des languettes de hauteur différente.

Ici en position embrayage engagé (garnitures 131,132 serrées) un espace existe entre les deux garnitures 131,132, en sorte que les pales 672 ne sont pas totalement écrasées pour permettre auxdites garnitures de s'adapter à la forme des plateaux de pression et de réaction.

Bien entendu, comme visible en pointillés à la figure 2, les plis 621 et les zones 622 ne sont pas forcément symétriques et il peut y avoir une alternance d'une languette à l'autre de la dissymétrie.

Il peut être souhaitable d'augmenter le nombre d'organes de fixation, tels que les rivets 47 précédemment décrits.

Ainsi le disque (figures 28 à 33) comporte une partie centrale 16 et une partie périphérique fractionnée en pales radiales 771 alternant circonférentiellement, ici régulièrement, avec une série de languettes radiales 772 dans le plan de la partie centrale 16 du disque porte-garnitures. Dans ces figures, les pales 771 et les languettes 772 sont d'un seul tenant avec la partie centrale 16.

Chaque pale se raccorde à la partie centrale 16 par un pied 724 et présente une zone centrale de portée 722 et deux zones périphériques de portée 723.

La zone centrale 722 sert à la fixation d'une garniture de frottement 132, tandis que les languettes 772 servent à la fixation d'une autre garniture de frottement 131. A cet effet, les languettes 772 et les zones centrales 722 des pales 771 présentent ici des trous 19, pour fixation desdites garnitures 131,132 au disque porte-garnitures ici par l'intermédiaire de rivets 47 (figure 28).

Plus précisément le disque porte-garnitures avec ses garnitures 131,132 appartient ici à un disque de friction comportant le disque porte-garnitures solidaire par rivetage du voile 4, lui-même solidaire du moyeu 3, le disque de friction étant alors du type rigide.

Le disque porte-garnitures est équipé de deux garnitures de frottement annulaires 131,132 montées dos-à-dos, de part et d'autre de la partie centrale 16 comme dans les figures 24 à 27.

Ainsi, lorsque l'on réengage l'embrayage, les garnitures 131,132 sont serrées élastiquement progressivement entre lesdits plateaux.

Ce serrage progressif est dû ici en majeure partie aux pales tripodes 771 et plus particulièrement grâce à leurs zones périphériques de portée 723 et au pied 724.

Ces pales 771 ont une forme de tripode avec trois zones planes de portée ou d'appui respectivement 723 et 722.

La zone plane centrale 722 est en contact avec la garniture de frottement 132 associée au plateau de pression et sert à la fixation de ladite garniture 132. Cette zone 722 se rétrécit en direction de la périphérie externe du disque porte-garnitures.

Les zones 723 s'étendent périphériquement de part et d'autre de la zone centrale 722. Elles ont une forme globalement triangulaire et sont raccordées à la zone 722 par des plis obliques 721, symétriques par rapport à l'axe radial de symétrie de la pale 771. Ces plis 721 sont obliques radialement et inclinés axialement.

Les zones 723 et 722 sont décalées axialement en étant parallèles entre elles. Plus précisément les zones 723 sont propres à venir en contact avec la garniture de frottement 131 associée au plateau de réaction de l'embrayage. Ici elles s'étendent dans le plan de la partie centrale 16.

La zone centrale 722 se raccorde à la partie centrale 16 par un pli d'orientation tangentielle 724 ou pli longitudinal perpendiculaire ici à l'axe de symétrie radial de la pale. Ce pli 724, oblique axialement, forme le pied de la pale et permet un décalage axial de la zone 722 par rapport à la partie centrale 16.

Ainsi lors de l'écrasement des garnitures 131,132 les zones 723 se déforment axialement. On notera que les plis 724 sont d'une grande largeur et donc très robustes. Des fentes verticales 224 séparent les pales 771 des languettes 772. Ces fentes débouchent à la périphérie externe du disque porte-garnitures et ont une extrémité interne fermée, de forme circulaire, pour raccordement aux plis 724 et à la partie centrale 16.

Les pales 771 cambrées ont une étendue circonférentielle réduite par rapport à celle des figures précédentes, en sorte que les languettes 772 ont une largeur circonférentielle voisine de celle des pales 771 suivant une caractéristique de l'invention. Les portées d'appui pour chaque garniture sont ainsi les plus proches possibles.

Ceci est réalisé dans le but de conserver le maximum d'appui pour les garnitures de frottement 131,132 avec des distances entre appui les plus faibles possible.

Il y a ainsi multiplication du nombre de pales. Le disque de friction ayant une grande taille, il s'agit ici d'implanter au moins deux rangées d'organes de fixation 47, tels que les rivets précités, des vis ou des boulons, pour les garnitures de frottement 131,132 et donc de doter au moins certaines pales 771 d'au moins deux trous de passage 19 pour lesdits organes de fixation.

Ainsi le disque porte-garnitures est caractérisé en ce que la zone centrale 722 d'au moins certaines pales tripodes 771 est prolongée centralement (en 725) radialement vers l'intérieur à la faveur d'une découpe 726 affectant le pli longitudinal 724 et en ce que ledit prolongement 725 est doté d'un trou 19 supplémentaire pour le passage d'un organe de fixation 47, ici d'un rivet 47. La surface d'appui pour la garniture 132 est ainsi augmentée.

Comme visible à la figure 29, un autre trou de passage 19 est implanté à la périphérie externe de la zone centrale 722 et de la pale 771.

Ainsi les trous 19, situés dans le même plan, sont séparés radialement d'une distance notable et sont ici implantés radialement sur l'axe de symétrie de la pale 771.

Suivant une caractéristique, les languettes 772 sont à l'image des pales 771 et comportent donc ici une zone centrale 823, dans le plan de la partie centrale 16, et deux zones périphériques de portée 822 de part et d'autre de ladite zone centrale 823.

Un pli 821, oblique radialement et incliné axialement, raccorde chaque zone 822 à la partie périphérique de la zone centrale 823. Les zones de stabilisation 822 sont décalées axialement en direction des zones centrales 722 des pales 771.

Deux trous de passage 19 dans le même plan sont prévus dans la zone centrale 823. Ces trous 19 sont radialement alignés sur l'axe de symétrie radial de la languette 772, en étant implantés sur les mêmes circonférences que les trous 19 des pales 771.

Pour certaines languettes 772, ces trous sont alignés avec un trou de passage 119 pour la fixation, à la figure 1 par rivetage, de la partie centrale 16 au voile 4 rapporté lui-même par rivetage sur une bride du moyeu 3.

Bien entendu en variante, représenté en pointillés à la figure 29, les languettes 772 pourraient être remplacées par une seconde série de pales tripodes cambrées, de forme analogue aux pales 771, avec un pli longitudinal raccordant la zone centrale à la partie centrale 16 du disque porte-garnitures et la découpe précitée.

Ici la découpe 726 a une forme de V à fond arrondi, la pointe du V étant dirigée vers l'axe du disque de friction (vers l'axe de la partie centrale 16). Le prolongement 725 a donc la forme d'un V arrondi. Il constitue une patte orientée globalement radialement comme dans les autres figures illustrées ci-après.

Cette découpe affecte le pli 724 ainsi que localement une faible partie la zone centrale 722 et la partie centrale 16. Le pli 724 est donc dédoublé, ce qui améliore le serrage progressif précité. Ce pli 724 a une bonne tenue mécanique malgré la découpe selon l'invention.

On notera que le prolongement 725 a une zone d'enracinement, à la zone centrale 722, évasée.

Grâce à cette zone d'enracinement les amorces de rupture sont réduites.

L'axe radial de symétrie de la découpe 726 est confondu avec l'axe radial de symétrie de la pale 771.

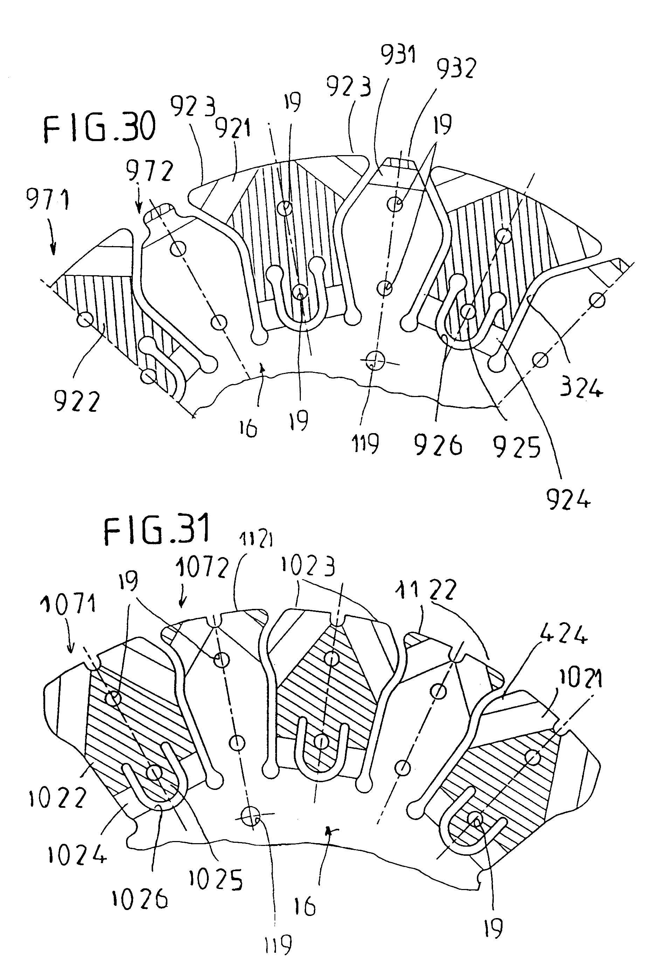

A la figure 30, certaines au moins des languettes 972 présentent à leurs extrémités libres, à la faveur d'un pli de raccordement 931, une zone de portée 932 décalée axialement en direction des zones centrales 922 des pales tripodes 971.

L'extrémité libre de la languette 972 est rétrécie circonférentiellement. Les languettes 972 ont une forme effilée à leur périphérie externe, tandis que centralement elles sont plus larges circonférentiellement. Ces languettes se rétrécissent en direction de la partie centrale 16, dans le plan de laquelle est située la partie principale de la languette 972.

Les fentes 324, séparant les languettes 972 des pales 971, ont donc une forme tortueuse avec à leur périphérie interne une partie verticale se raccordant à une partie inclinée débouchant à la périphérie externe des pales 971. Les zones de portée périphérique 923 des pales 971 se raccordent par des plis inclinés 921 à la zone centrale 922, chaque pale ayant globalement la forme d'un T et présentant un pli longitudinal 924 affecté par une découpe 926 comme à la figure 2.

Les découpes 926 ont ici une forme de U dont les extrémités des branches ont une forme circulaire et sont implantées dans la zone centrale 922.

Le prolongement 925 a donc la forme d'un U avec une zone d'enracinement - à la zone centrale 922 - rétrécie, le fond du U étant dirigé vers l'axe de l'ensemble (vers l'axe de la partie centrale 16).

Bien entendu à la figure 31 les découpes 1026 peuvent avoir la forme d'un U ainsi que les prolongements 1025.

Dans cette figure, les pales tripodes 1071 à plis obliques radialement 1021 et plis longitudinaux 1024, alternent circonférentiellement régulièrement avec des languettes 1072 à l'image des pales 1071 comme dans la figure 2 c'est-à-dire avec des zones de portée périphérique 1122 et des plis inclinés 1131.

Dans ce cas, la périphérie externe des languettes 1072 est élargie circonférentiellement, tandis que la périphérie externe des pales 1071 est bombée, les fentes de séparation 424 ayant une forme tortueuse.

On notera que dans les figures 29 à 31, les languettes offrent au moins une zone de portée supplémentaire de stabilisation.

Ainsi lors de l'écrasement des garnitures 131,132 la ou les zones respectivement 932-822-1122 sont propres à venir en contact avec la garniture 132 pour offrir ainsi une réaction. Lesdites zones constituent donc des zones de stabilisation s'étendant ici dans le plan de la zone centrale 722 grâce aux plis précités 931-821-1131.

En variante ces zones peuvent être légèrement en retrait par rapport aux zones centrales. Ainsi la garniture 131 reste bien plane.

Ainsi on obtient un disque porte-garnitures avec à sa périphérie externe de grandes zones de portée réduisant les phénomènes d'incrustation et de broutement car les garnitures de frottement 131,32 restent dans un plan bien parallèle. Le disque porte-garnitures et donc le disque de friction peuvent ainsi tourner à grande vitesse tout en suivant le mouvement de mise en cône des plateaux de pression et de réaction. Les usures des garnitures sont encore mieux réparties.

On appréciera que les plis 724-924-1024-931-921-821-1131-1021 donnent une bonne stabilité au disque porte-garnitures, ce qui permet d'avoir un bon contact des garnitures de frottement avec les plateaux de pression et de réaction, ce qui réduit les usures des garnitures de frottement.

On appréciera que le bon équilibre du disque de friction et la bonne planéité de ses garnitures de frottement notamment dûs à la répartition régulière des trous de fixation 19 et à leur position sur l'axe de symétrie des languettes et des pales tripodes.

Ici en position embrayage engagé (garnitures 131,132 serrées) un espace existe entre les deux garnitures 131,132, en sorte que les pales 771-971-1071 ne sont pas totalement écrasées pour permettre auxdites garnitures de s'adapter à la forme des plateaux de pression et de réaction.

Bien entendu les plis longitudinaux 724-924-1024 peuvent ne pas constituer à eux seuls le pied des pales, un bout des pieds raccordant les plis à la partie centrale du disque.

On peut rajouter une bande de collage s'étendant radialement d'un trou 19 à un autre pour parfaire la fixation des garnitures de frottement.

Dans le cas où la taille radiale des languettes et des pales le permet, on peut ajouter au moins un autre trou de passage 19 pour encore un organe supplémentaire de fixation.

Bien entendu certaines pales et/ou languettes peuvent être dépourvues d'un trou de passage supplémentaire 19 et donc d'un prolongement selon l'invention.

On peut réaliser toutes les combinaisons possibles. Par exemple à la figure 29, les languettes 772 peuvent être pourvues d'un seul trou 19 implanté centralement dans la languette 772.

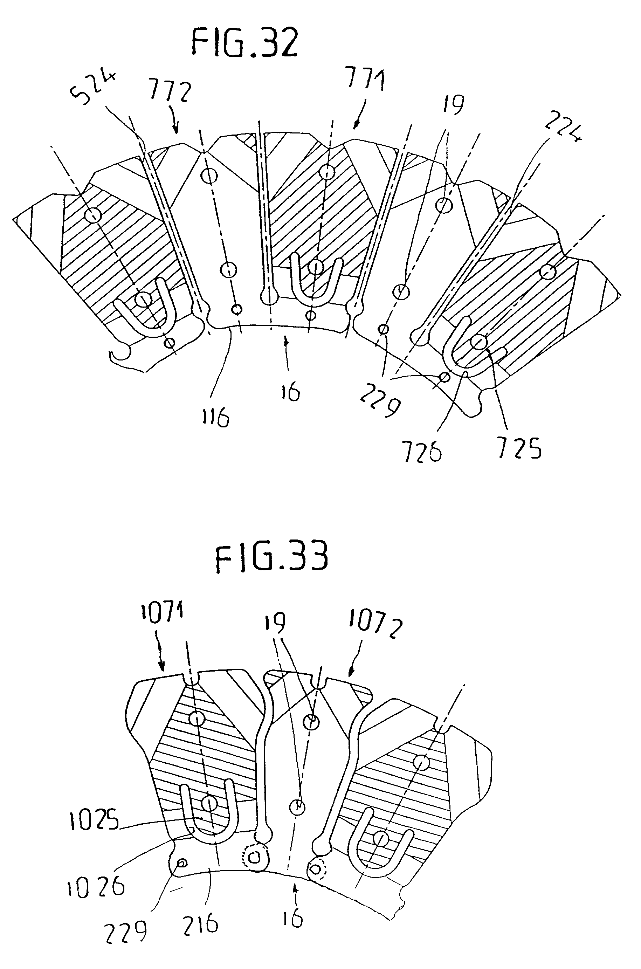

La partie centrale 16 peut être fractionnée en bandes 116, comme visible à la figure 32, dotée de pales 771 et de languettes 772 comme à la figure 2.

Chaque pale 771 est d'un seul tenant avec la bande 116 en forme de secteur annulaire. Cette bande 116 relie une pale 771 à une languette 772 et comporte deux trous 229 pour sa fixation au voile 4, ici par rivetage.

A la figure 33, la partie centrale 16 est fractionnée en bandes 226 avec des oreilles à chacune de leurs extrémités circonférentielles. Les oreilles sont dotées de trous 229 et se recouvrent d'une languette 1072 à une pale 1071 consécutive. Les bandes 226 sont fixées au voile 4 par rivetage à la faveur des trous 229.

Dans les figures 32 et 33, c'est le voile 4 qui relie entre elles les bandes 116,226. La partie centrale est ainsi en deux parties, à savoir les bandes 116,226 et le voile 4.

Bien entendu, dans les figures 15 à 20, on peut prévoir des trous supplémentaires dans les pattes 226 (figure 15) encadrant les plis longitudinaux 280,281.

Dans ce cas, on peut prévoir trois trous de fixation, répartis chacun au sommet d'un triangle, pour les pales tripodes 271,272 à savoir le trou 19 dans l'axe de symétrie et deux trous supplémentaires pour les deux pattes 226 à raison d'un trou par pattes.

La fixation des garnitures de frottement est donc meilleure grâce aux trois trous.

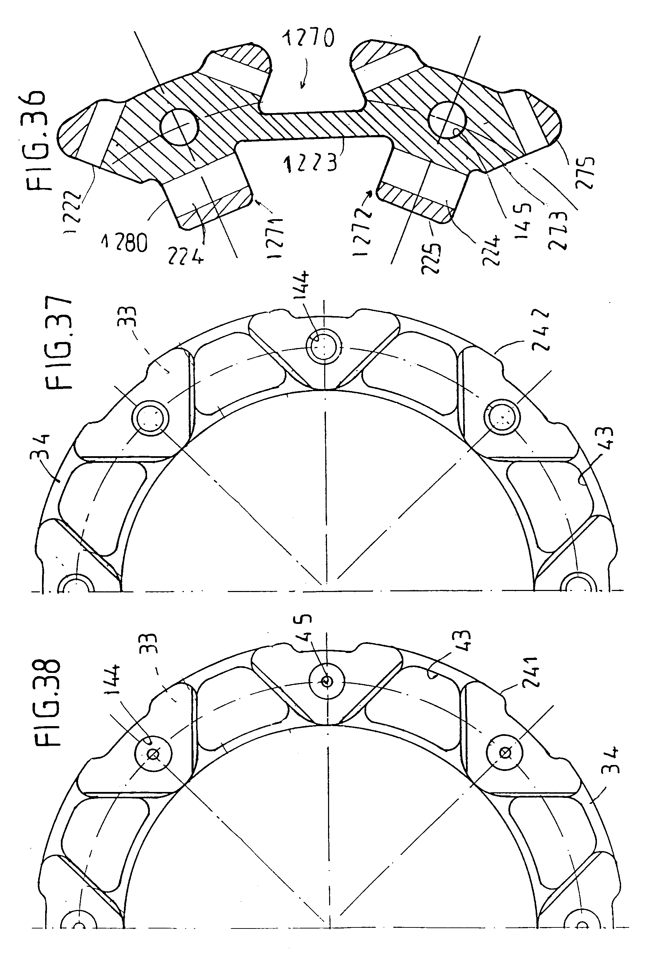

Bien entendu on peut fixer les plots chanfreinés de la figure 12 sur les couronnes 40 de la figure 9 comme visible dans les figures 34 à 38 et les pales peuvent ne pas transmettre le couple, contrairement aux autres modes de réalisation des figures 1 à 33. Ainsi, dans les figures 34,38, ces pales ont uniquement une fonction de progressivité axiale.

Ces pales procurent les mêmes avantages que dans les figures précédentes, notamment en ce qui concerne l'augmentation des surfaces de contact, la diminution des phénomènes d'incrustation, de broutement et d'usure des garnitures de frottement.

Dans ces figures, le disque porte-garnitures comporte une partie centrale 16 portant d'un seul tenant à sa périphérie externe des languettes ou pales radiales 260 dans son plan.

A leur périphérie externe, ces languettes présentent une portion inclinée en direction de la garniture de frottement 32 comme visible à la figure 35.

Les pales 260 sont accolées à la couronne 40 de la garniture de frottement 31, qui est destinée à coopérer avec le plateau de réaction de l'embrayage.

La couronne 40, évidée en 43, est fixée auxdites pales 260 par des rivets 147. Ces rivets sont étagés et consistent en des colonnettes avec une partie de plus grand diamètre pour montage du support 40 de la garniture 32.

Cette partie de plus grand diamètre est épaulée et sert de butée audit support 40, tandis que le pied déformé de la colonnette 147 sert de butée à la couronne 40 associée à la garniture de frottement 31.

Des plots 241,242, analogues aux plots de la figure 12, sont montés sur les couronnes 40 et constituent, avec leurs couronnes associées, les garnitures de frottement 31,32 souples et d'inertie diminuée grâce aux évidements 43.

Des trous 144,45,145,245,345, ici centraux, sont prévus pour le passage des colonnettes 147. Plus précisément, les trous 245 pratiqués dans la couronne de support 40 de la garniture de frottement 32, pour passage des colonnettes 147, ont un diamètre supérieur à celui des trous 45 de la couronne de support 40 de la garniture de frottement 31 pour passage des colonnettes 147.

Des pales doubles 1270 sont interposées axialement entre les pales 260 et la couronne 40 de la garniture 32. Ces pales 1270 ont une épaisseur inférieure à celle de la languette 260 et sont donc plus souples.

Chaque pale 1270 est composée de deux pales 1271,1272 reliées circonférentiellement entre elles par une bande de matière 1223 permettant un blocage en rotation desdites pales 1271,1272, qui sont à l'image des pales 171 et 172 de la figure 14.

Les pales 1271 et 1272, du type tripode, ici en forme de tête de chat, comportent donc chacune une zone centrale de grande portée 273 et deux zones périphériques 275 décalées axialement par rapport aux zones 273.

Les zones 273, qui se rétrécissent en allant vers la périphérie externe des pales 260 et de la partie centrale 16, se raccordent aux zones 275, ici en forme d'oreille, par des plis obliques 1222 par rapport à l'axe de symétrie radial de la pale et dirigés axialement tous dans le même sens, les zones 275 étant destinées à venir en contact avec les pales 260 du disque porte-garnitures.

Les portées centrales 273 sont raccordées par des plis tangentiels 224, par rapport à l'axe de symétrie radial de la pale, destinés à venir en contact avec la partie centrale 16 du disque porte-garnitures.

Les colonnettes 147 traversent les plots 241,242 à la faveur d'ouvertures centrales 144 ménagées dans ceux-ci. Ces colonnettes traversent centralement les zones 273 à la faveur d'un trou 145 et les pales 260 à la faveur d'un trou 345.

La tête de la colonnette 147 s'appuie contre la couronne 40 de la garniture 32.

Bien entendu les trous 144, ménagés dans les plots 241,242, ont une taille supérieure à celle des figures 9 et 12.

Les trous 144,45,145,245,345 sont alignés axialement en étant en correspondance les uns avec les autres, les trous 345 et 45 étant de même diamètre et il en est de même des trous 245 et 145.

Ainsi le pied des colonnettes 147 fixe la couronne 40 concernée aux pales 260, tandis que l'autre couronne 40 et les pales doubles 1270 coulissent axialement sur la partie de plus grand diamètre des colonnettes, en étant ainsi reliées aux pales 260 et à la partie centrale 16 par lesdites colonnettes.

Ainsi les pales 260 portent les garnitures 31 et 32 et les pales doubles tripodes 270 à la faveur des colonnettes 147, la garniture 31 étant fixe axialement par rapport aux colonnettes 147, tandis que l'autre garniture 32 et les pales doubles 270 peuvent se déplacer axialement le long des colonnettes 147, qui ainsi transmettent le couple, tandis que les pales doubles, ici métalliques, ont une fonction d'élasticité axiale.

Bien entendu un jeu radial est prévu entre les ouvertures 245,345 et la tête des colonnettes 147 de façon à ce que la garniture 32 puisse suivre le mouvement du plateau de pression, de manière précitée.

L'écartement axial maximal entre les deux couronnes 40 est déterminé par les colonnettes 147 c'est-à-dire par la distance séparant les pieds des colonnettes des épaulements de leur tête.

La partie centrale 16 porte donc les pales tripodes 1270 via les pales radiales 260, lesdites pales doubles tripodes 1270 se raccordant à ladite partie centrale par ici deux pieds (un par pale 1271,1272) comportant les plis longitudinaux 224 précités, ainsi qu'une languette d'extrémité 225 destinée à venir en contact avec la partie centrale 16 c'est-à-dire propre à se raccorder à ladite partie centrale 16.

Les pieds 224,225 ont donc la forme d'une languette globalement triangulaire en étant dirigés radialement vers l'intérieur, les pales 1272,1271 étant d'orientation radiale comme visible à la figure 36.

Les plots 241,242 sont identiques entre eux.

Grâce à la pluralité de pales doubles 1270, la garniture 32 peut suivre aisément le mouvement de mise en cône du plateau de pression.

En outre les pales 1271,1272 ne risquent pas de pivoter grâce à la bande de matière 1223. Cette bande 1223 est souple en étant d'orientation tangentielle. La bande relie entre elle les deux zones centrales 273. Elle est enracinée à la base desdites zones, en-dessous des plis 1222 et de la circonférence passant par les centres des trous 145 (figure 36).

Le disque porte-garnitures peut donc tourner à des vitesses de rotation très élevées sans risque de rupture, l'épaisseur de la pale double 1270 étant choisie en fonction de critères d'élasticité, puisque ladite pale ne transmet pas de couple.

Bien entendu, dans les figures 19 et 20, on peut rajouter un pli supplémentaire à l'extrémité de la zone 422B de la figure 19. Ce pli supplémentaire délimitant une zone de portée supplémentaire terminale, comme visible en pointillés à la figure 19.

Ces zones de portée terminales sont décalées axialement par rapport aux zones de portée 422B en direction de la zone centrale 321A. Ainsi on obtient une zone de portée supplémentaire.

Ainsi qu'on l'aura compris et qu'il ressort à l'évidence de la description et des dessins, les pales tripodes ont avantageusement une zone centrale de forme symétrique pour avoir une bonne tenue mécanique et lorsque l'on écrase les garnitures de frottement, les zones de portées périphériques, du fait du déploiement des plis obliques, ont tendance à se rapprocher de la zone centrale et donc à venir en contact avec la garniture de frottement associée à la zone centrale.

Une progressivité naturelle est ainsi obtenue.

Avantageusement les pales sont symétriques.

## Revendications

1. Disque porte-garnitures propre à la constitution d'un disque de friction, notamment pour véhicule automobile, du genre comportant une partie centrale (16,160) et une partie périphérique fractionnées en pales radiales (17,170,270,370,470) propres à recevoir des garnitures de frottement (31,32-131,132), chacune desdites pales se raccordant à ladite partie centrale par un pied (80,81-180,181-280-380) et comportant au moins une zone de portée (21A,21B-121A,121B,123A,123B-...) globalement parallèle au plan moyen de ladite partie centrale, pour contact avec l'une au moins desdites garnitures de frottement et fixation de celles-ci, caractérisé en ce que, pour formation de pales du type tripode, certaines au moins desdites pales (17,170,270,370) présentent une zone centrale de portée (21A,23B-121A,123B-222A,223B-321A...), pour contact avec l'une des garnitures de frottement (31,32-131,132) et fixation de celle ci et deux zones périphériques de portée (21B,23A-121B,123A-222B,223A...) de part et d'autre de ladite zone centrale, pour contact avec l'autre des garnitures de frottement (31,32-131,132), et en ce que ladite zone centrale de portée est décalée axialement par rapport auxdites zones périphériques de portée et à ladite partie centrale et est raccordée, d'une part, à la partie centrale (16) du disque porte-garnitures par un pli tangentiel (80,81-180,181-280-380...) perpendiculaire à l'axe de symétrie radial de ladite pale et, d'autre part, auxdites zones périphériques par des plis obliques (22A,22B-122A,122B...) par rapport à l'axe de symétrie radial de ladite pale.

2. Disque porte-garnitures selon la revendication 1, caractérisé en ce que ladite zone centrale de portée comporte une partie interne et une partie externe moins large circonférentiellement que la partie interne.

3. Disque porte-garnitures selon la revendication 1 ou 2, caractérisé en ce que la pale présente à sa périphérie externe centralement une échancure (50).

4. Disque porte-garnitures selon la revendication 1 ou 2, caractérisé en ce que la zone centrale de portée (121A,123B) présente une languette périphérique externe (151).

5. Disque porte-garnitures selon la revendication 1 ou 2, caractérisé en ce que la zone centrale de portée (223B,221A) a une extrémité en forme de pointe.

6. Disque porte-garnitures selon l'une quelconque des revendications 1 à 5, caractérisé en ce que les zones de portée centrale (221A,223B-321A) présentent à leur périphérie interne deux pattes (226) encadrant un pli tangentiel (280,281).

7. Disque porte-garnitures selon l'une quelconque des revendications 1 à 6, caractérisé en ce que les pales (17,170,270) sont fractionnées en deux jeux de pales, les zones périphériques de portée d'une des pales étant dans le plan de la zone centrale de portée de l'autre pale et vice versa.

8. Disque porte-garnitures selon la revendication 7, caractérisé en ce que les plis tangentiels (180,181) de chaque jeu de pales (172,171) ont une longueur différente.

9. Disque porte-garnitures selon la revendication 7 ou 8, caractérisé en ce que les plis obliques (122B,122A) ont une taille différente d'un jeu de pales à l'autre.

10. Disque porte-garnitures selon l'une quelconque des revendications 1 à 6, caractérisé en ce que lesdites pales alternent circonférentiellement avec une série de languettes radiales (371,471,671...) dans le plan de la partie centrale du disque porte-garnitures.

11. Disque porte-garnitures selon la revendication 10, caractérisé en ce qu'au moins une des zones de portée périphériques (422B) enveloppe en partie une languette radiale (471).

12. Disque porte-garnitures selon la revendication 11, caractérisé en ce que ladite languette radiale a une extrémité arrondie.

13. Disque porte-garnitures selon l'une quelconque des revendications 10 à 12, caractérisé en ce que certaines au moins desdites languettes (671) présentent, à leur extrémité libre à la faveur d'un pli de raccordement (621), une zone de portée (622) décalée axialement en direction de la zone centrale des pales (672).

14. Disque porte-garnitures selon la revendication 13, caractérisé en ce que lesdites languettes (671) ont une extrémité libre (622,621) rétrécie circonférentiellement.

15. Disque porte-garnitures selon la revendication 13 ou 14, carctérisé en ce que les languettes ont une forme effilée en direction de leur périphérie externe, en sorte que la zone d'enracinement avec la partie centrale (16) du disque porte-garnitures est augmentée.

16. Disque porte-garnitures selon la revendication 15, caractérisé en ce que les pattes radiales (671) sont séparées des pales (672) par des fentes (24) en forme de canne.

17. Disque porte-garnitures selon l'une quelconque des revendications 13 à 16, caractérisé en ce que ladite zone de portée (622) est de hauteur inférieure à celle desdites zones périphériques (422) et à celle de son pli de raccordement (621).

18. Disque porte-garnitures selon l'une quelconque des revendications 1 à 17, dans lequel ladite zone centrale de portée comporte au moins un trou (19) pour le passage d'un organe de fixation (47), caractérisé en ce que la zone centrale (722-922-1022) d'au moins certaines pales tripodes (771-971-1071) est prolongée centralement (en 725-925-1025) radialement vers l'intérieur à la faveur d'une découpe (726-926-1026) affectant le pli longitudinal (724-924-1024) et en ce que ledit prolongement (725-925-1025) est doté d'un trou supplémentaire (19) pour le passage d'un organe de fixation (47).

19. Disque porte-garnitures selon la revendication 18, caractérisé en ce que lesdits prolongements (725-925-1025) sont en forme de pattes s'étendant globalement radialement.

20. Disque porte-garnitures selon la revendication 18 ou 19, caractérisé en ce que les découpes (726-926-1026) affectent localement ladite zone centrale (722-922-1022).

21. Disque porte-garnitures selon la revendication 20, caractérisé en ce que les découpes (726) ont globalement la forme d'un V à fond arrondi, la pointe du V étant dirigée vers l'axe de la partie centrale (16).

22. Disque porte-garnitures selon la revendication 21, caractérisé en ce que les découpes (926-1026) ont une forme de U, dont le fond est dirigé vers l'axe de la partie centrale (16).

23. Disque porte-garnitures selon la revendication 22, caractérisé en ce que le prolongement (925) a la forme d'un U avec une zone d'enracinement, à ladite zone centrale, rétrécie.

24. Disque porte-garnitures selon l'une quelconque des revendications 18 à 23, caractérisé en ce que l'axe radial de symétrie des découpes (726-926-1026) est confondu avec l'axe de symétrie radial des pales tripodes (771-971-1071).

25. Disque porte-garnitures selon l'une quelconque des revendications 18 à 24, caractérisé en ce que les pales tripodes (771-1071) alternent circonférentiellement avec des languettes (772-1072) à l'image desdites pales, en sorte que lesdites languettes présentent une zone centrale (823-1023) dans le plan de la partie centrale (16) et deux zones périphériques de portée (822-1122) de part et d'autre de ladite zone centrale (823-1023).

26. Disque porte-garnitures selon l'une quelconque des revendications 18 à 25, caractérisé en ce que les pales tripodes (1071) alternent circonférentiellement avec des languettes (972) présentant à leurs extrémités libres à la faveur d'un pli de raccordement (931), une zone de portée (932) décalée axialement en direction des zones centrales (922) des pales tripodes (971) associées.

27. Disque porte-garnitures selon l'une quelconque des revendications 1 à 9, caractérisé en ce que lesdites pales du type tripode (1270) sont composées de deux pales tripodes (271,272) reliées entre elles par une bande de matière (1223) pour blocage en rotation desdites pales, en sorte qu'il est formé des pales doubles.

28. Disque porte-garnitures selon la revendication 27, caractérisé en ce que lesdites pales doubles (1270) sont montées coulissantes sur des colonnettes (147), portées par des pales radiales (260), solidaires de la partie centrale (16).

29. Disque porte-garnitures selon la revendication 28, caractérisé en ce que les zones centrales (273) des pales doubles (1271,1272) sont trouées pour montage à jeu radial sur lesdites colonnettes.

30. Disque porte-garnitures selon l'une quelconque des revendications 1 à 29, équipé de deux garnitures de frottement (31,32) s'étendant de part et d'autre de sa partie périphérique, caractérisé en ce que chaque garniture comporte une couronne de support continue (40,140) avec une alternance de première plage (33) pour fixation de plots de frottement et de seconde plage ajourée.

31. Disque porte-garnitures selon la revendication 29 et 30, caractérisé en ce que les pales doubles (1270) sont interposées axialement entre les pales radiales (260) de la partie centrale (16) et la couronne (40) de la garniture de frottement (32) concernée.

32. Disque porte-garnitures selon la revendication 30 ou 31, caractérisé en ce que les plots de frottement ont une forme triangulaire avec une pointe dirigée vers l'intérieur.

## Claims

1. A liner support disc for a clutch friction wheel, especially for a motor vehicle, of the kind comprising a central portion (16, 160) and a peripheral portion divided into radial blades (17, 170, 270, 370, 470), which are adapted to receive friction liners (31, 32; 131, 132), with each of the said blades being joined to the said central portion through a foot (80, 81; 180, 181; 280; 380) and having at least one support surface zone (21A, 21B; 121A, 121B; 123A, 123B; ...) generally parallel to the midplane of the said central portion, for contact with at least one of the said friction liners and such as to be secured to the latter,
characterised in that, for constituting blades of the tripod type, at least some of the said blades (17, 170, 270, 370) have a central support surface zone (21A, 23B; 121A, 123B; 222A, 223B; 321A ...), for contact with one of the friction liners (31, 32; 131, 132) and for fastening of the latter, together with two peripheral support surface zones (21B, 23A; 121B, 123A; 222B, 223A ...) on either side of the said central zone, for contact with the other one of the friction liners (31, 32; 131, 132),
and in that the said central support surface zone is offset axially with respect to the said peripheral support surface zones and to the said central portion, and is connected, firstly, to the central portion (16) of the liner support disc through a tangential fold (80, 81; 180, 181; 280; 380 ...) at right angles to the radial axis of symmetry of the said blade, and secondly, to the said peripheral zones through folds (22A, 22B; 122A, 122B ...), which are oblique with respect to the radial axis of symmetry of the said blade.

2. A liner support disc according to Claim 1, characterised in that the said central support surface zone comprises an inner portion and an outer portion, which is narrower than the inner portion in the circumferential direction.

3. A liner support disc according to Claim 1 or Claim 2, characterised in that the blade has a central recess (50) in its outer periphery.

4. A liner support disc according to Claim 1 or Claim 2, characterised in that the central support surface zone (121A, 123B) has an external peripheral tongue (151).

5. A liner support disc according to Claim 1 or Claim 2, characterised in that the central support surface zone (223B, 221A) has a pointed end.

6. A liner support disc according to any one of Claims 1 to 5, characterised in that the central support surface zones (221A, 223B; 321A) have at their inner periphery two lugs (226) flanking a tangential fold (280, 281).

7. A liner support disc according to any one of Claims 1 to 6, characterised in that the blades (17, 170, 270) are divided into two sets of blades, with the peripheral support surface zones of one of the blades being in the plane of the central support surface zone of the other blade, and vice versa.

8. A liner support disc according to Claim 7, characterised in that the tangential folds (180, 181) of each set of blades (172, 171) are of different lengths.

9. A liner support disc according to Claim 7 or Claim 8, characterised in that the oblique folds (122B, 122A) in one set of blades are of a different size from those in the other set.

10. A liner support disc according to any one of Claims 1 to 6, characterised in that the said blades are arranged alternately in the circumferential sense with a series of radial tongues (371, 471, 671 ...), in the plane of the central portion of the liner support disc.

11. A liner support disc according to Claim 10, characterised in that at least one of the peripheral support surface zones (422B) partly envelops a radial tongue (471).

12. A liner support disc according to Claim 11, characterised in that the said radial tongue has a rounded end.

13. A liner support disc according to any one of Claims 10 to 12, characterised in that at least some of the said tongues (671) have at their free end a support surface zone (622) carried by a junction fold (621) and offset axially to extend in the direction of the central zone of the blades (672).

14. A liner support disc according to Claim 13, characterised in that the said tongues (671) have a free end (622, 621) which is of reduced circumferential width.

15. A liner support disc according to Claim 13 or Claim 14, characterised in that the tongues have a slender form towards their outer periphery, such that the root zone joining them to the central portion (16) of the liner support disc is enlarged.

16. A liner support disc according to Claim 15, characterised in that the radial lugs (671) are separated from the blades (672) by crook-shaped slots (24).

17. A liner support disc according to any one of Claims 13 to 16, characterised in that the said support surface zone (622) has a depth which is smaller than that of the said peripheral zones (422), and smaller than that of its junction fold (621).

18. A liner support disc according to any one of Claims 1 to 17, in which the said central support surface zone includes at least one hole (19) for receiving a fastener (47), characterised in that the central zone (722; 922; 1022) of at least some tripod blades (771; 971; 1071) is extended centrally (at 725; 925; 1025) radially inwardly by means of a slit (726; 926; 1026) formed in the longitudinal fold (724; 924; 1024), and in that the said extension (725; 925; 1025) is formed with an additional hole (19) for receiving a fastener (47).

19. A liner support disc according to Claim 18, characterised in that the said extensions (725; 925; 1025) are in the form of lugs extending generally radially.

20. A liner support disc according to Claim 18 or Claim 19, characterised in that the slits (726; 926; 1026) extend locally into the said central zone (722; 922; 1022).

21. A liner support disc according to Claim 20, characterised in that the slits (726) have a general shape of a V with a rounded base, the point of the V being directed towards the axis of the central portion (16).

22. A liner support disc according to Claim 21, characterised in that the slits (926; 1026) are U-shaped, the base of the U being directed towards the axis of the central portion (16).

23. A liner support disc according to Claim 22, characterised in that the extension (925) is U-shaped, with a root zone of reduced width joining it to the said central zone.

24. A liner support disc according to any one of Claims 18 to 23, characterised in that the radial axis of symmetry of the slits (726; 926; 1026) is coincident with the radial axis of symmetry of the tripod blades (771; 971; 1071).

25. A liner support disc according to any one of Claims 18 to 24, characterised in that the tripod blades (771; 1071) are arranged alternately in the circumferential direction with tongues (772; 1072) of the same aspect as the said blades, whereby the said tongues have a central zone (823; 1023) in the plane of the central portion (16), together with two peripheral support surface zones (822; 1122) on either side of the said central zone (823; 1023).

26. A liner support disc according to any one of Claims 18 to 25, characterised in that the tripod blades (1071) are arranged alternately in the circumferential direction with tongues (972) having, at their free ends in a junction fold (931), a support surface zone (932) which is offset axially towards the central zones (922) of the associated tripod blades (971).

27. A liner support disc according to any one of Claims 1 to 9, characterised in that the said blades of the tripod type (1270) comprise two tripod blades (271, 272), joined together by an integral strip (1223) for preventing rotation of the said blades, whereby to define double blades.

28. A liner support disc according to Claim 27, characterised in that the said double blades (1270) are mounted for sliding movement on support pins (147), carried by radial support tongues (260) that are fixed to the central portion (16).

29. A liner support disc according to Claim 28, characterised in that the central zones (273) of the double blades (1271, 1272) are perforated for mounting on the said support pins with a radial clearance.

30. A liner support disc according to any one of Claims 1 to 29, having two friction liners (31, 32) extending on either side of its peripheral portion, characterised in that each liner comprises an endless support crown (40, 140) with first sections (33) for fastening of friction pads thereto, arranged alternately with perforated second sections.

31. A liner support disc according to Claim 29 or Claim 30, characterised in that the double blades (1270) are interposed axially between the radial support tongues (260) of the central portion (16) and the crown (40) of the corresponding friction liner (32).

32. A liner support disc according to Claim 30 or Claim 31, characterised in that the friction pads are triangular in shape, having an apex directed inwardly.

## Patentansprüche

1. Reibbeläge tragende Scheibe für die Bildung einer Reibungsscheibe, insbesondere für Kraftfahrzeuge, in der Ausführung mit einem Mittelteil (16,160) und einem Umfangsteil, die in radiale Segmente (17,170,270,370, 470) für die Aufnahme der Reibbeläge (31,32-131,132) unterteilt sind, wobei sich jedes der besagten Segmente über einen Fuß (80,81-180,181-280-380, an den besagten Mittelteil anschließt und mindestens einen Auflagebereich (21A,21B-121A,121B,123A,123B-...) umfaßt, der insgesamt parallel zur Mittelebene des besagten Mittelteils verläuft, um mit mindestens einem der besagten Reibbeläge in Berührung zu treten und diese zu befestigen , **dadurch gekennzeichnet,** daß zur Bildung von Segmenten mit drei Auflagestellen wenigstens einige der besagten Segmente (17,170,270,370) einen mittleren Auflagebereich (21A,23B-121A,123B-222A,223B-321A...) für die Berührung mit einem der zwei Reibbeläge (31,32-131, 132) und dessen Befestigung sowie zwei Umfangsauflagebereiche (21B,23A-121B,123A-222B,223A...) beiderseits des besagten mittleren Auflagebereichs für die Berührung mit dem anderen Reibbelag (31,32-131,132) aufweisen und daß der besagte mittlere Auflagebereich im Verhältnis zu den besagten Umfangsauflagebereichen und zu dem besagten Mittelteil axial versetzt ist und sich einerseits an den Mittelteil (16) der die Reibbeläge tragenden Scheibe über eine senkrecht zur radialen Symmetrieachse des besagten Segments verlaufende Tangentialbiegung (80,81-180,181-280-380...) und andererseits an die besagten Umfangsauflagebereiche über Biegungen (22A,22B-122A,122B...) anschließt, die schräg im Verhältnis zur radialen Symmetrieachse des Segments verlaufen.

2. Reibbeläge tragende Scheibe nach Anspruch 1 , **dadurch gekennzeichnet,** daß der besagte mittlere Auflagebereich einen Innenteil und einen Außenteil umfaßt, der am Kreisumfang weniger breit als der Innenteil ist.

3. Reibbeläge tragende Scheibe nach Anspruch 1 oder 2, **dadurch gekennzeichnet,** daß das Segment an seinem äußeren Umfang mittig einen Ausschnitt (50) aufweist.

4. Reibbeläge tragende Scheibe nach Anspruch 1 oder 2, **dadurch gekennzeichnet,** daß der mittlere Auflagebereich (121A,123B) eine äußere Umfangszunge (151) aufweist.

5. Reibbeläge tragende Scheibe nach Anspruch 1 oder 2, **dadurch gekennzeichnet,** daß der mittlere Auflagebereich (223B,221A) ein Ende in Form einer Spitze hat.

6. Reibbeläge tragende Scheibe nach einem der Ansprüche 1 bis 5 , **dadurch gekennzeichnet,** daß die mittleren Auflagebereiche (221A,223B-321A) an ihrem inneren Umfang zwei Ansätze (226) aufweisen, die eine Tangentialbiegung (280,281) einfassen.

7. Reibbeläge tragende Scheibe nach einem der Ansprüche 1 bis 6 , **dadurch gekennzeichnet,** daß die Segmente (17,170,270) in zwei Segmentgruppen unterteilt sind, wobei die Umfangsauflagebereiche eines der Segmente in der Ebene des mittleren Auflagebereichs des anderen Segments angeordnet sind und umgekehrt.

8. Reibbeläge tragende Scheibe nach Anspruch 7 , **dadurch gekennzeichnet,** daß die Tangentialbiegungen (180,181) jeder Segmentgruppe (172,171) eine unterschiedliche Länge haben.

9. Reibbeläge tragende Scheibe nach Anspruch 7 oder 8, **dadurch gekennzeichnet,** daß die Schrägbiegungen (122B,122A) von einer Segmentgruppe zur anderen eine unterschiedliche Größe haben.

10. Reibbeläge tragende Scheibe nach einem der Ansprüche 1 bis 6 , **dadurch gekennzeichnet,** daß die besagten Segmente am Kreisumfang mit einer Reihe von radialen Zungen (371,471,671...) in der Ebene des Mittelteils der die Reibbeläge tragenden Scheibe abwechseln.

11. Reibbeläge tragende Scheibe nach Anspruch 10, **dadurch gekennzeichnet,** daß wenigstens einer der Umfangsauflagebereiche (422B) eine radiale Zunge (471) teilweise umhüllt.

12. Reibbeläge tragende Scheibe nach Anspruch 11, **dadurch gekennzeichnet,** daß die besagte radiale Zunge ein abgerundetes Ende hat.

13. Reibbeläge tragende Scheibe nach einem der Ansprüche 10 bis 12, **dadurch gekennzeichnet,** daß wenigstens einige der besagten Zungen (671) an ihrem freien Ende mittels einer Anschlußbiegung (621) einen Auflagebereich (622) aufweisen, der axial in Richtung des mittleren Auflagebereichs der Segmente (672) versetzt ist.

14. Reibbeläge tragende Scheibe nach Anspruch 13**, dadurch gekennzeichnet,** daß die besagten Zungen (671) ein freies Ende (622, 621) haben, das sich am Kreisumfang verengt.

15. Reibbeläge tragende Scheibe nach Anspruch 13 oder 14 , **dadurch gekennzeichnet,** daß die Zungen eine in Richtung ihres äußeren Umfangs spitz zulaufende Form haben, so daß der Übergangsbereich zum Mittelteil (16) der die Reibbeläge tragenden Scheibe vergrößert wird.

16. Reibbeläge tragende Scheibe nach Anspruch 15, **dadurch gekennzeichnet,** daß die radialen Ansätze (671) von den Segmenten (672) durch spazierstockförmige Schlitze (24) getrennt sind.

17. Reibbeläge tragende Scheibe nach einem der Ansprüche 13 bis 16, **dadurch gekennzeichnet,** daß der besagte mittlere Auflagebereich (622) eine geringere Höhe als die besagten Umfangsauflagebereiche (422) und als seine Anschlußbiegung (621) aufweist.

18. Reibbeläge tragende Scheibe nach einem der Ansprüche 1 bis 17, wobei der besagte mittlere Auflagebereich wenigstens ein Loch (19) für den Durchgang eines Befestigungsorgans (47) aufweist, **dadurch gekennzeichnet,** daß der mittlere Auflagebereich (722-922-1022) wenigstens einiger Segmente mit drei Auflagestellen (771-971-1071) mittig (bei 725-925-1025) radial nach innen mittels eines Einschnitts (726-926-1026) verlängert wird, der auf die Längsbiegung (724-924-1024) übergreift, und daß die besagte Verlängerung (725-925-1025) mit einem zusätzlichen Loch (19) für den Durchgang eines Befestigungsorgans (47) versehen ist.

19. Reibbeläge tragende Scheibe nach Anspruch 18, **dadurch gekennzeichnet,** daß die besagten Verlängerungen (725-925-1025) in Form von Ansätzen ausgeführt sind, die sich insgesamt radial erstrecken.

20. Reibbeläge tragende Scheibe nach Anspruch 18 oder 19 , **dadurch gekennzeichnet,** daß die Einschnitte (726-926-1026) örtlich auf den besagten mittleren Auflagebereich (722-922-1022) übergreifen.

21. Reibbeläge tragende Scheibe nach Anspruch 20, **dadurch gekennzeichnet,** daß die Einschnitte (726) insgesamt die Form eines abgerundeten V haben, wobei die Spitze des V zur Achse des Mittelteils (16) gerichtet ist.

22. Reibbeläge tragende Scheibe nach Anspruch 21, **dadurch gekennzeichnet,** daß die Einschnitte (926-1026) die Form eines U haben, dessen Boden zur Achse des Mittelteils (16) gerichtet ist.

23. Reibbeläge tragende Scheibe nach Anspruch 22, **dadurch gekennzeichnet,** daß die Verlängerung (925) die Form eines U mit einem verengten Übergangsbereich zu dem besagten mittleren Auflageberich hat.

24. Reibbeläge tragende Scheibe nach einem der Ansprüche 18 bis 23, **dadurch gekennzeichnet,** daß die radiale Symmetrieachse der Einschnitte (726-926-1026) mit der radialen Symmetrieachse der Segmente mit drei Auflagestellen (771-971-1071) zusammenfällt.

25. Reibbeläge tragende Scheibe nach einem der Ansprüche 18 bis 24, **dadurch gekennzeichnet,** daß die Segmente mit drei Auflagestellen (771-1071) am Kreisumfang mit Zungen (772-1072) in Entsprechung zu den besagten Segmenten abwechseln, so daß die besagten Zungen einen mittleren Auflagebereich (823-1023) in der Ebene des Mittelteils (16) und zwei Umfangsauflagebereiche (822-1122) beiderseits des besagten mittleren Auflagebereichs (823-1023) aufweisen.

26. Reibbeläge tragende Scheibe nach einem der Ansprüche 18 bis 25**, dadurch gekennzeichnet,** daß die Segmente mit drei Auflagestellen (1071) am Kreisumfang mit Zungen (972) abwechseln, die an ihren freien Enden mittels einer Anschlußbiegung (931) einen Auflagebereich (932) aufweisen, der axial in Richtung der mittleren Auflagebereiche (922) der zugehörigen Segmente mit drei Auflagestellen (971) versetzt ist.

27. Reibbeläge tragende Scheibe nach einem der Ansprüche 1 bis 9 , **dadurch gekennzeichnet,** daß die besagten Segmente mit drei Auflagestellen (1270) aus zwei Segmenten mit drei Auflagestellen (271,272) bestehen, die untereinander durch einen einstückigen Streifen (1223) als Drehsicherung der besagten Segmente verbunden sind, so daß Doppelsegmente gebildet werden.

28. Reibbeläge tragende Scheibe nach Anspruch 27, **dadurch gekennzeichnet,** daß die besagten Doppelsegmente (1270) verschiebbar auf Distanzbolzen (147) angebracht sind, die auf fest mit dem Mittelteil (16) verbundnen radialen Segmenten (260) angeordnet sind.

29. Reibbeläge tragende Scheibe nach Anspruch 28**, dadurch gekennzeichnet,** daß die mittleren Auflagebereiche (273) der Doppelsegmente (1271,1272) für die mit radialem Spiel erfolgende Anbringung an den besagten Distanzbolzen gelocht sind.

30. Reibbeläge tragende Scheibe nach einem der Ansprüche 1 bis 29, bestückt mit zwei Reibbelägen (31, 32), die sich beiderseits ihres Umfangsteils erstrecken, **dadurch gekennzeichnet,** daß jeder Reibbelag einen durchgehenden Tragkranz (40,140) umfaßt, an dem ein erster Bereich (33) für die Befestigung der Reibplättchen und ein durchbrochener zweiter Bereich abwechseln.

31. Reibbeläge tragende Scheibe nach Anspruch 29 und 30 , **dadurch gekennzeichnet,** daß die Doppelsegmente (1270) axial zwischen den radialen Segmenten (26) des Mittelteils (16) und dem Kranz (40) des betreffenden Reibbelags (32) eingesetzt sind.

32. Reibbeläge tragende Scheibe nach Anspruch 30 oder 31 , **dadurch gekennzeichnet,** daß die Reibplättchen eine dreieckige Form mit einer nach innen gerichteten Spitze haben.
